# EUROPEAN PATENT APPLICATION

(11) **EP 4 601 277 A1**
(43) Date of publication of application: **13.08.2025**
(21) Application number: 23898151.8
(22) Date of filing: 15.11.2023
(51) Int. Cl.: H04M 1/72454, H04M 1/02, G06F 3/0484, G06F 3/0481, G06F 3/041

(54) **ELECTRONIC DEVICE, AND VIDEO PLAYBACK METHOD BASED ON EXTENSION OR REDUCTION OF FLEXIBLE DISPLAY IN ELECTRONIC DEVICE**

(30) Priority: 30.11.2022 KR 20220164936; 20.12.2022 KR 20220179565
(71) Applicant: Samsung Electronics Co., Ltd., Suwon-si, Gyeonggi-do 16677 (KR)
(72) Inventor: CHUNG, Chongyoon, Suwon-si Gyeonggi-do 16677 (KR); PARK, Sangil, Suwon-si Gyeonggi-do 16677 (KR); HA, Dohyung, Suwon-si Gyeonggi-do 16677 (KR); KWON, Kijin, Suwon-si Gyeonggi-do 16677 (KR); KIM, Kisung, Suwon-si Gyeonggi-do 16677 (KR); PARK, Minhoo, Suwon-si Gyeonggi-do 16677 (KR); LEE, Wooseok, Suwon-si Gyeonggi-do 16677 (KR); JUNG, Gwangchae, Suwon-si Gyeonggi-do 16677 (KR)
(74) Representative: Gulde & Partner
(86) International application number: PCT/KR2023/018341
(87) International publication number: WO 2024/117619

(57) **Abstract**

An electronic device according to various embodiments of the present disclosure comprises: a first housing; a second housing which accommodates at least a part of the first housing, and which is connected to the first housing to enable sliding of the first housing; a flexible display connected to the first housing; a driving unit for moving the first housing and the flexible display in the extension direction or the reduction direction; a memory; and a processor, wherein the memory can store instructions configured to, when executed by the processor, cause the electronic device to identify one from among a reduced state, a moving state and an extended state of the flexible display on the basis of a video clip playback event, and control the flexible display such that, in the reduced state, a first image included in the video clip is displayed in a display area of the reduced state, in the moving state, video is displayed in the display area of the moving state by using at least a part of the video clip, and, in the extended state, a second image included in the video clip is displayed in the display area of the extended state. Other embodiments are also possible.

## Description

### [Technical Field]

Various embodiments of the disclosure relate to an electronic device including a flexible display.

### [Background Art]

As electronic, information, and communication technologies have advanced, various functions are being integrated into a single portable communication or electronic device. For example, a smartphone includes a communication function as well as functions of a sound playback device, an imaging device, or an electronic notebook, and various functions can be implemented in the smartphone through the installation of additional applications.

As the use of personal or portable communication devices such as smartphones becomes more common, user demand for portability and ease of use has increased. For example, a touchscreen display can serve as a screen, for example, an output device that outputs visual information, while also providing a virtual keypad that replaces a mechanical input device (e.g., a button-type input device). This has enabled portable communication devices or electronic devices to become compact while offering the same or even better usability (e.g., larger screens). Furthermore, the commercialization of flexible displays, such as foldable or rollable displays, is expected to further improve the portability and ease of use of electronic devices.

### [Detailed Description of the Invention]

### [Technical Problem]

An image or video set on a lock screen or a home background screen in electronic devices may be displayed at a predetermined video size and/or speed. In an electronic device that include a flexible display, the flexible display can slide in or out (i.e., slide movement) to transition from a retracted state to an extended state or from an extended state to a retracted state, thereby changing the size of the display area.

### [Technical Solution]

According to one embodiment of the disclosure, an electronic device may include: a first housing; a second housing which accommodates at least a portion of the first housing and which is connected to the first housing to enable a sliding movement of the first housing; a flexible display connected to the first housing; a driving unit configured to move the first housing and the flexible display in an extension direction or a retraction direction; and at least one processor. According to one embodiment, the at least one processor may be configured to identify one state from among a retracted state, a moving state, and an extended state of the flexible display, based on a video clip playback event. According to one embodiment, the at least one processor may be configured to, in the retracted state of the flexible display, display, in a display area of the retracted state, a first image included in a video . According to one embodiment, the at least one processor may be configured to, in the moving state of the flexible display, display, in a display area of the moving state, a video by using at least a portion of the video clip. According to one embodiment, the at least one processor may be configured to, in the extended state of the flexible display, control the flexible display to display, in a display area of the extended state, a second image included in the video clip.

According to one embodiment of the disclosure, a method for video playback based on extension or retraction of a flexible display in an electronic device may include identifying one state from among a retracted state, a moving state, and an extended state of a flexible display, based on a video clip playback event. According to one embodiment, the method may include, in the retracted state, displaying a first image included in a video clip on the flexible display of the retracted state. According to one embodiment, the method may include, in the moving state, displaying a video on the flexible display of the moving state by using at least a portion of the video clip. According to one embodiment, the method may include, in the extended state, displaying a second image included in the video clip on the flexible display of the extended state.

According to one embodiment of the disclosure, in a non-volatile storage medium storing instructions, the instructions are configured to, when executed by an electronic device, cause the electronic device to perform at least one operation, wherein the at least one operation may include: identifying one state from among a retracted state, a moving state, and an extended state of a flexible display, based on a video clip playback event; in the retracted state, displaying a first image included in a video clip on the flexible display of the retracted state; in the moving state, displaying a video on the flexible display of the moving state by using at least a portion of the video clip; and in the extended state, displaying a second image included in the video clip on the flexible display of the extended state.

### [Advantageous Effects]

According to various embodiments of the disclosure, a more personalized home background screen or lock screen video display may be possible by adjusting and displaying the size of a video on a home background screen or a lock screen in conjunction with the extended or retracted state of the flexible display in the electronic device.

### [Brief Description of Drawings]

FIG. 1 is a block diagram of an electronic device in a network environment according to one embodiment.
FIG. 2A illustrates a state in which the display area of a flexible display according to one embodiment is accommodated in a housing.
FIG. 2B illustrates a state in which the display area of a flexible display according to one embodiment is exposed to the outside of a housing.
FIG. 3 illustrates examples of the retracted and extended states of a flexible display of an electronic device according to one embodiment.
FIG. 4 is a block diagram of an electronic device according to one embodiment.
FIG. 5 is a flowchart illustrating a video clip playback operation based on the extension or retraction of a flexible display in an electronic device according to one embodiment.
FIG. 6 illustrates screens displayed on a display when an electronic device according to one embodiment is in a retracted state, a moving state, and an extended state.
FIG. 7 is a flowchart of video clip generation in an electronic device according to one embodiment.
FIG. 8A illustrates image frames of a video according to one embodiment.
FIG. 8B is an example of setting the size and area of at least one image between a first image corresponding to a retracted state and a second image corresponding to an extended state according to one embodiment.
FIG. 9 is a flowchart illustrating the operation of generating a video clip based on the number of images according to frame criteria in one embodiment.
FIG. 10 is a flowchart illustrating the operation of generating a video clip based on a display's movement time according to time criteria in one embodiment.
FIG. 11 is a flowchart illustrating the operation of generating a video clip based on the number of images and a display's movement time according to hybrid criteria in one embodiment.
FIG. 12A illustrates the length of movement based on the extension of a display according to one embodiment.
FIG. 12B illustrates lines connecting vertices of a first area in a first image to respective vertices of a second area in a second image according to one embodiment.
FIG. 12C illustrates the size and area of each of at least one image between a first image and a second image according to one embodiment.
FIG. 13 is a flowchart illustrating a video clip playback operation when a display according to one embodiment transitions from a retracted state to an extended state.
FIG. 14 is a flowchart illustrating a video clip playback operation when a display according to one embodiment transitions from an extended state to a retracted state.
FIG. 15 illustrates a screen on which a video clip is played on a lock screen according to one embodiment.
FIG. 16 illustrates a screen on which a video clip is played on a home background screen according to one embodiment.
FIG. 17 illustrates screens for selecting a video and an editing method during video clip generation according to one embodiment.
FIG. 18A illustrates a screen displayed when generating a video clip based on the moving time of a display according to time criteria in one embodiment.
FIG. 18B illustrates a screen displayed when generating a video clip based on a user input according to frame criteria in one embodiment.
FIG. 18C illustrates a screen displayed during video clip generation based on hybrid criteria according to one embodiment.

In describing the drawings, the same or similar reference numerals may be used for the same or similar components.

### [Mode for Carrying out the Invention]

The terms used herein are used only to describe specific embodiments and may not be intended to limit the scope of other embodiments. The singular expressions may include plural expressions unless the context clearly indicates otherwise. All terms used herein, including technical or scientific terms, may have the same meaning as generally understood by those skilled in the art of the disclosure. Terms defined in commonly used dictionaries may be interpreted as having the same or similar meaning as the meaning the terms have in the context of the related art, and unless explicitly defined herein, the terms are not interpreted as having an ideal or excessively formal meaning. In some cases, even terms defined herein cannot be interpreted as excluding embodiments of the disclosure.

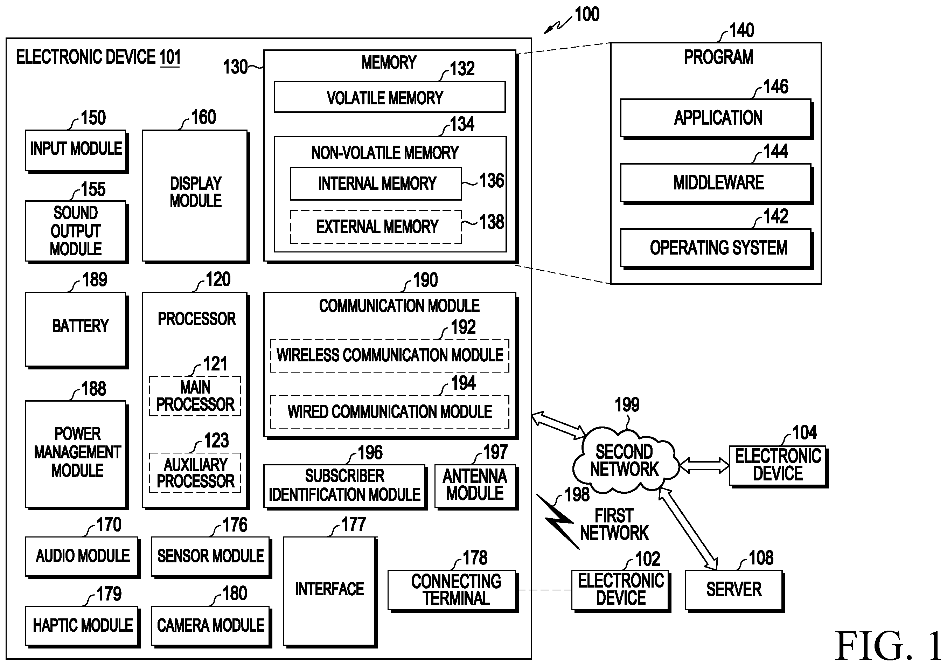

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

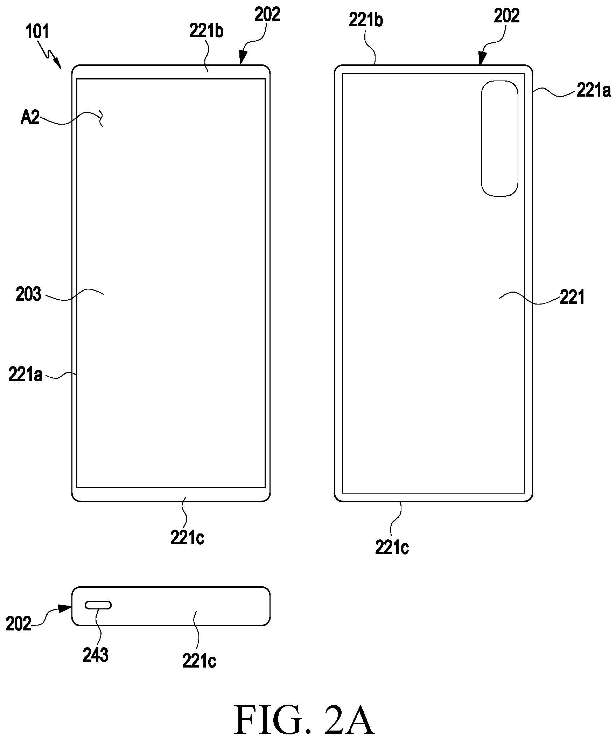

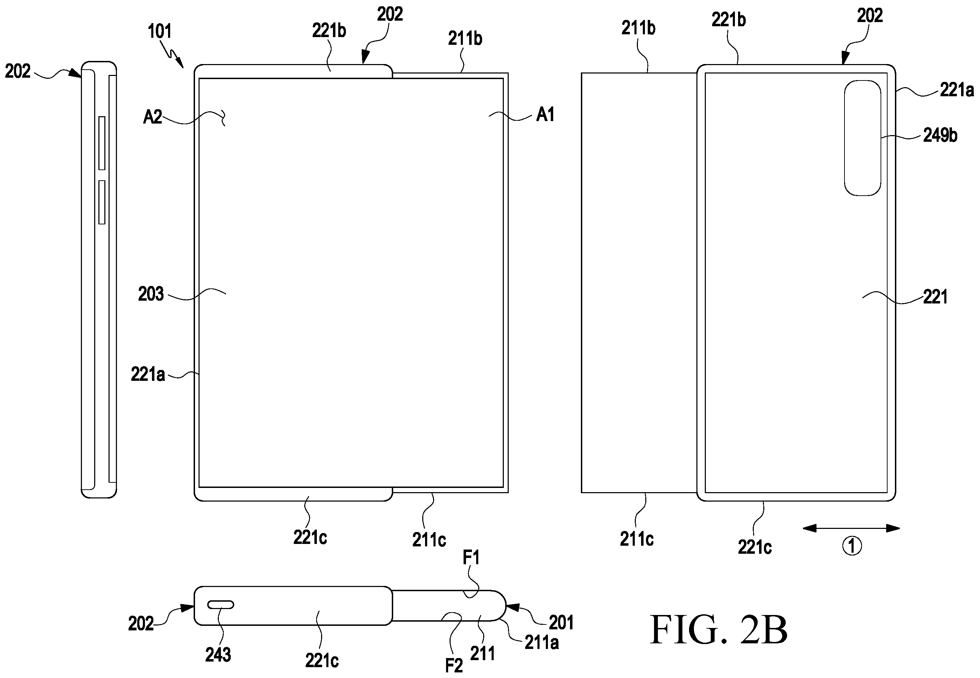

FIG. 2A illustrates a state in which the display area of a flexible display according to one embodiment is accommodated in a housing. FIG. 2B illustrates a state in which the display area of a flexible display according to one embodiment is exposed to the outside of a housing.

FIGS. 2A and 2B illustrate a structure in which a flexible display 203 extends to the right when viewed from the front of an electronic device 101. The state illustrated in FIG. 2A may be defined as a first housing 201 being closed with respect to a second housing 202, and the state illustrated in FIG. 2B may be defined as the first housing 201 being open with respect to the second housing 202. Depending on the embodiment, the "closed state" or "open state" may be defined as a state in which the electronic device is closed or opened.

Referring to FIGS. 2A and 2B, the electronic device 101 may include housings 201 and 202. The housings 201 and 202 may include a second housing 202 and a first housing 201 disposed movably relative to the second housing 202. In some embodiments, the electronic device 101 may be interpreted as having a structure in which the second housing 202 is disposed to be slidable on the first housing 201. According to one embodiment, the first housing 201 may be disposed to reciprocate a certain distance relative to the second housing 202 in an illustrated direction, for example, in a direction indicated by arrow ①. The configuration of the electronic device 101 in FIG. 2A and FIG. 2B may be fully or partially identical to the configuration of the electronic device 101 in FIG. 1.

According to one embodiment, the first housing 201 may be referred to, for example, as a first structure, a slide portion, or a slide housing, and may be disposed to be reciprocable on the second housing 202. According to one embodiment, the first housing 201 may accommodate various electrical and electronic components, such as a circuit board or a battery. The second housing 202 may be referred to, for example, as a second structure, a main portion, or a main housing, and may guide the movement of the first housing 201. A portion (e.g., a first display area A1) of the display 203 may be seated in the first housing 201. According to one embodiment, the other portion (e.g., a second display area A2) of the display 203 may be accommodated in the second housing 202 (e.g., a slide-in operation) or exposed to the outside of the second housing 202 (e.g., a slide-out operation) as the first housing 201 moves (e.g., slides) relative to the second housing 202. According to one embodiment, a motor, a speaker, a shim socket, and/or a sub-circuit board electrically connected to a main circuit board may be disposed in the first housing 201. The main circuit board on which electrical components such as an application processor (AP) and a communication processor (CP) are mounted may be disposed in the second housing 202.

According to one embodiment, the first housing 201 may include a first plate 211 (e.g., a slide plate). The first plate 211 may include a first face (e.g., a first face F1 in FIG. 2B) forming at least a portion of the first plate 211 and a second face F2 facing in a direction opposite to that of the first face F1. According to one embodiment, the first plate 211 may support at least a portion (e.g., the first display area A1) of the display 203. According to one embodiment, the first housing 201 may include the first plate 211, a (1-1)th sidewall 211a extending from the first plate 211, a (1-2)th sidewall 211b extending from the (1-1)th sidewall 211a and the first plate 211, and a (1-3)th sidewall 211c extending from the (1-1)th sidewall 211a and the first plate 211 and parallel to the (1-2)th sidewall 211b.

According to one embodiment, the second housing 202 may include a second plate 221 (a main case), a (2-1)th sidewall 221a extending from the second plate 221, a (2-2)th sidewall 221b extending from the (2-1)th sidewall 221a and the second plate 221, and a (2-3)th sidewall 221c extending from the (2-1)th sidewall 221a and the second plate 221 and parallel to the (2-2) sidewall 221b. According to one embodiment, the (2-2)th sidewall 221b and the (2-3)th sidewall 221c may be formed perpendicular to the (2-1)th sidewall 221a. According to one embodiment, the second plate 221, the (2-1)th sidewall 221a, the (2-2)th sidewall 221b, and the (2-3)th sidewall 221c may be formed with one side (e.g., a front face) opened to accommodate (or surround) at least a portion of the first housing 201. For example, the first housing 201 may be coupled to the second housing 202 in a at least partially surrounded state, and may slide a direction parallel to the first face F1 or the second face F2, for example, in the direction of arrow ①, while being guided by the second housing 202. According to one embodiment, the second plate 221, the (2-1)th sidewall 221a, the (2-2)th sidewall 221b, and/or the (2-3)th sidewall 221c may be integrally formed. According to another embodiment, the second plate 221, the (2-1)th sidewall 221a, the (2-2)th sidewall 221b, and/or the (2-3)th sidewall 221c may be formed as a separate housing and may be combined or assembled.

According to one embodiment, the second plate 221 and/or the (2-1)th sidewall 221a may cover at least a portion of the flexible display 203. For example, at least a portion of the flexible display 203 may be accommodated in the second housing 202, and the second plate 221 and/or the (2-1)th sidewall 221a may cover a portion of the flexible display 203 accommodated in the second housing 202.

According to various embodiments, the first housing 201 is moveable in an open state and a closed state relative to the second housing 202 in a first direction (e.g., the direction of ①) parallel to the (2-2)th sidewall 221b or the (2-3)th sidewall 221c, and the first housing 201 may move to be positioned at a first distance from the (2-1)th sidewall 221a in the closed state and positioned at a second distance from the (2-1)th sidewall 221a, which is longer than the first distance, in the open state. In some embodiments, in the closed state, the first housing 201 may surround a portion of the (2-1)th sidewall 221a.

According to one embodiment, the electronic device 101 may include a display 203, a key input device 241, a connector hole 243, an audio module (not shown), or a camera module (not shown). Although not shown, the electronic device 101 may further an indicator (e.g., an LED device) or various sensors. The configurations of the display 203, the audio module (not shown), and the camera module (not shown) in FIG. 2A and FIG. 2B may be fully or partially identical to the configurations of the display module 160, the audio module 170, and the camera module 180 in FIG. 1.

According to various embodiments, the display 203 may include a first display area A1 and a second display area A2. According to one embodiment, the first display area A1 may be disposed on the first housing 201. For example, the first display area A1 may extend substantially across at least a portion of the first face F1 and may be disposed on the first face F1. The second display area A2 may extend from the first display area A1 and may be inserted or accommodated into the second housing 202 (e.g., a structure) or exposed to the outside of the second housing 202, depending on sliding of the first housing 201.

According to various embodiments, the second display area A2 may move while being substantially guided by one area of the first housing 201, to be accommodated into the second housing 202 or into a space formed between the first housing 201 and the second housing 202, or exposed to the outside. According to one embodiment, the second display area A2 may be moved based on sliding of the first housing 201 in the first direction (e.g., the direction indicated by arrow ①). For example, during the sliding of the first housing 201, a portion of the second display area A2 may be deformed into a curved surface shape at a location corresponding to a curved surface of the first housing 201.

According to various embodiments, when viewed from above the first plate 211 (e.g., the slide plate), when the first housing 201 moves from a closed state to an open state, the second display area A2 may gradually be exposed to the outside of the second housing 202, thereby substantially forming a planar surface with the first display area A1. The display 203 may be coupled with or disposed adjacent to a touch sensing circuit, a pressure sensor capable of measuring the intensity (pressure) of a touch, and/or a digitizer for detecting a magnetic stylus pen. In one embodiment, the second display area A2 may be at least partially accommodated in the second housing 202, and even in the state (e.g., the closed state) shown in FIG. 2A, a portion of the second display area A2 may be visually exposed to the outside. According to an embodiment, regardless of the closed or open state, the exposed portion of the second display area A2 may be positioned on a portion of the first housing, and the portion of the second display area A2 may maintain a curved surface shape.

According to one embodiment, the electronic device 101 may include at least one hinge structure (not shown). The hinge structure may connect the first housing 201 to the second housing 202. For example, the hinge structure may be connected to the first plate 211 and the second plate 221. According to one embodiment, the hinge structure may transmit a driving force to the first housing 201 to guide the sliding of the first housing 201. For example, the hinge structure may include an elastic material (e.g., a spring) and may provide an elastic force in a first direction (e.g., the direction of ① in FIG. 2B) based on the sliding of the first housing 201. According to one embodiment, the hinge structure may be excluded.

According to one embodiment, the key input device 241 may be positioned in one area of the first housing 201. Depending on appearance and use, the electronic device 101 may be designed to omit the illustrated key input device 241 or to include additional key input device(s). According to one embodiment, the electronic device 101 may include a key input device not shown, such as a home key button, or a touch pad disposed around the home key button. According to another embodiment, at least a portion of the key input device 241 may be disposed on the (2-1)th sidewall 221a, (2-2)th sidewall 221b, or (2-3)th sidewall 221c of the second housing 202.

According to various embodiments, the connector hole 243 may be omitted according to the embodiments, and may accommodate a connector (e.g., a USB connector) for transmitting and receiving power and/or data to and from an external electronic device. Although not shown, the electronic device 101 may include multiple connector holes 243, and some of the multiple connector holes 243 may function as connector holes for transmitting and receiving audio signals to and from an external electronic device. In the illustrated embodiment, the connector hole 243 is disposed on the second-third sidewall 221c, but the disclosure is not limited thereto, and the connector hole 243 or a connector hole not shown may be disposed on the (2-1)th sidewall 221a or the (2-2)th sidewall 221b.

According to one embodiment, the first housing 201 may include the first plate 211 and a slide cover (not shown). The first plate 211 and the slide cover (not shown) may be mounted to (e.g., at least partially connected to) the second housing 202, and may linearly reciprocate on the second housing 202 in one direction (e.g., in the direction of arrow ① in FIG. 2B). According to one embodiment, the first plate 211 may support the display 203. For example, the first plate 211 may include a first face F1, and the first display area A1 of the display 203 may be substantially positioned on the first face F1 and maintained in a flat plate shape. The slide cover may protect the display 203 positioned on the first plate 211. For example, at least a portion of the display 203 may be positioned between the first plate 211 and the slide cover. According to one embodiment, the first plate 211 and the slide cover may be formed of a metallic material and/or a non-metallic (e.g., polymer) material. According to one embodiment, the first plate 211 may accommodate at least some of the components of the electronic device 101 (e.g., the battery 189 in FIG. 1, a motor (not shown), and a rack (not shown)). According to various embodiments, the second housing 202 may accommodate at least one or multiple substrates. For example, the second housing 202 may include a circuit board (or a main circuit board) (not shown), wherein the main circuit board may be equipped with a processor, memory, and/or an interface. The processor may include one or more of, for example, a central processing unit, an application processor, a graphics processing unit, an image signal processor, a sensor hub processor, or a communications processor. According to various embodiments, the circuit board may include a flexible printed circuit board type radio frequency cable (FRC). For example, the circuit board may be disposed on at least a portion of the second plate 221 and may be electrically connected to an antenna module (e.g., the antenna module 197 in FIG. 1) and a communication module (e.g., the communication module 190 in FIG. 1).

According to one embodiment, the memory may include, for example, volatile memory or non-volatile memory.

According to one embodiment, the interface may include, for example, a high-definition multimedia interface (HDMI), a universal serial bus (USB) interface, an SD card interface, and/or an audio interface. The interface may electrically or physically connect the electronic device 101 to an external electronic device, for example, and may include a USB connector, an SD card/MMC connector, or an audio connector.

According to one embodiment, the electronic device 101 may further include a separate sub-circuit board spaced apart from the circuit board within the second housing 202. The subcircuit board may be electrically connected to electrical components, such as a battery or speakers and/or a shim socket, disposed at an end area of the electronic device 101, to transmit signals and power.

According to one embodiment, the battery is a device for supplying power to at least one component of the electronic device 101 and may include, for example, a non-rechargeable primary cell, a rechargeable secondary cell, or a fuel cell. At least a portion of the battery may be substantially coplanar with, for example, a circuit board. The battery may be integrally disposed within the electronic device 101, or may be removably disposed in the electronic device 101.

According to one embodiment, the electronic device 101 may include a rack (not shown), disposed on the second housing 202 (e.g., the second plate 221) to guide the sliding of the first housing 201 (e.g., the first plate 211), and a motor (not shown) configured to transmit a driving force to a gear (not shown) for rotational movement along the rack.

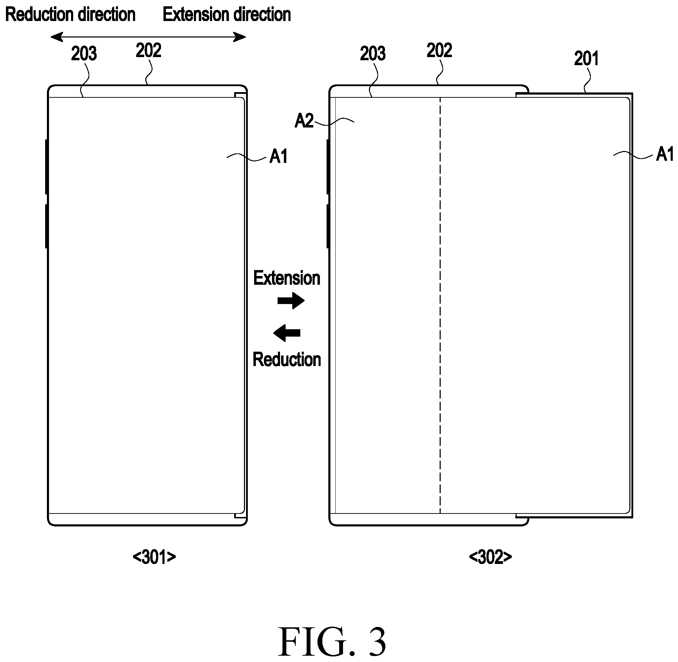

FIG. 3 illustrate examples of retracted and extended states of a flexible display of an electronic device according to one embodiment.

Referring to FIG. 3, the electronic device 101 according to one embodiment may display a first display area A1 in a retracted state <301>.

The display 203 according to one embodiment may move in an extension direction (slide-out direction) relative to the second housing 202, based on a user's physical force or a driving force generated in the extension direction in the retracted state <301>. According to one embodiment, the display 203 may be in an extended state <302> when the display 203 has moved up to the maximum movable distance in the extension direction (slide-out direction) relative to the second housing 202, and may be in a moving state (or partially extended state) when the display 460 is moving or has moved less than the maximum movable distance in the extended direction (slide-out direction) relative to the second housing 202. In the extended state <302>, at least a portion (e.g., A2) of the display 203 may be exposed to the front face of the electronic device 101, thereby extending the display area. The display 203 according to one embodiment may move in a retraction direction (slide-in direction) relative to the second housing 202 based on a driving force generated in the retraction direction or a physical force from a user. According to one embodiment, the display 203 may be in a retracted state <301> when the display 203 has moved in the retraction direction (slide-in direction) relative to the second housing 202 up to a maximum movable distance.

According one embodiment, in the retracted state <301>, the electronic device 101 may display an image having a first size by using the first display area A1. In an extended state <302>, the electronic device 101 according to one embodiment may display an image having a second size by using the first display area A1 and the extended display area A2. In the moving state, the electronic device 101 according to one embodiment may display an image in a display area extended by a movement length that is greater than the first display area A1 and less than the second display area A2 of the display 203.

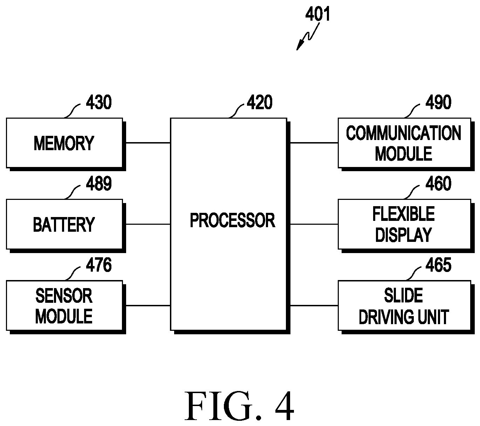

FIG. 4 is a block diagram of an electronic device according to one embodiment.

Referring to FIG. 4, an electronic device 401 (e.g., the electronic device 101 in FIG. 1) according to one embodiment may include at least one processor 420, memory 430, a flexible display 460, a slide driving unit 465, a sensor module 476, and/or a communication module 490. The electronic device 401 according to one embodiment is not limited thereto, and may be configured to further include various components or exclude some of the above components. The electronic device 401 according to one embodiment may further include all or a portion of the electronic device 101 illustrated in FIG. 1.

The flexible display 460 (e.g., the display 160 in FIG. 1 or the display 203 in FIG. 2A, 2B, or 3) (hereinafter, also referred to as the display) according to one embodiment may be in the form of a touch screen. When implemented in the form of a touch screen together with an input module, the display 460 may display various types of information produced in response to a user's touch actions. According to one embodiment, the display 460 may be configured to be rollable during a slid-in or slide-out operation. According to one embodiment, based on the slide-in or slide-out operation of the display 460, the display 460 may be in a first state (e.g., a retracted state) in which a screen shown by the display 460 is retracted to the smallest size, in a second state (e.g., an extended state) in which the screen shown by the display 460 is extended to the largest size, or in a third state (e.g., a moving state) in which the screen shown by the display 460 is between the retracted state and the extended state. For example, the display 460 moves in a first direction (slide-out direction) with respect to the first housing 201 and/or the second housing 202, thereby entering an extended state in which at least a portion (e.g., A2) is exposed from the inside of the first housing 201 and/or the second housing 202 to the front face of the electronic device 101. Furthermore, the display 460 moves from the first direction to a second direction (e.g., slide-in direction), opposite to the first direction, with respect to the first housing 201 and/or the second housing 202, thereby entering a retracted state in which at least a portion (e.g., A2) is not exposed to the front face of the electronic device 101.

The slide driving unit 465 according to one embodiment may include a motor, a gear, and/or a rack, and may use the motor, gear, and/or rack to make the display 460 (e.g., the first housing 201 (or at least a portion (e.g., A2) of the display 203) slide in or out. According to one embodiment, the motor may be driven by receiving power (or current) to transmit a driving force to the gear connected to the motor. The motor according to one embodiment may be implemented to provide a specified thrust (force) (e.g., a force of about 3 kgf) based on a repulsive force upon sliding in or out of the display 460, and the motor may have a specified diameter (e.g., about 6.2 T or greater) to provide the specified force. The gear according to one embodiment may operate in conjunction with the rack based on the driving force from the motor, thereby enabling the display 460 to slide in or out.

According to one embodiment, the slide driving unit 465 may use a driving force from the motor to cause the display 460 to slide in or out (e.g., an automatic slide), or may use both a driving force from the motor and a driving force from an external physical force (e.g., a pulling or pushing force from a user) to cause the display 460 to slide in or out (e.g., a semi-automatic slide). According to one embodiment, the slide driving unit 465 may not include the motor, and when the slide driving unit 465 does not include a motor, the driving force from an external physical force (e.g., a pulling or pushing force from a user) may be used to cause the display 460 to slide in or out (e.g., a manual slide).

The sensor module 476 (e.g., the sensor module 176 in FIG. 1) according to one embodiment may include at least one sensor. According to one embodiment, the at least one sensor may perform sensing to obtain the distance moved as the first housing 201 (or at least a portion of the display 460) moves from a state (closed) in which the first housing 201 is slid in the second housing 202 to a state (opened state) in which the first housing is slid out from the second housing 202, or vice versa. For example, the at least one sensor may include at least one Hall sensor (not shown). The at least one Hall sensor 320 according to one embodiment may include multiple Hall sensors (not shown), and the multiple Hall sensors (not shown) may be disposed at specified intervals in a section in which the first housing 201 (or at least a portion of the display 203) reciprocates. Each of the multiple Hall sensors (not shown) may detect a magnetic field intensity (or a change in magnetic field intensity) and provide information about the detected magnetic field intensity (or data or values) (e.g., Hall IC raw data (X-axis, Y-axis, and Z-axis data)) to the processor 420. For example, as the first housing 201 (or at least a portion of the display 460) moves from a state (closed state) in which the first housing 201 is slid in the second housing 202 to a state (opened state) in which the first housing is slid out from the second housing 202, or vice versa, a magnetic field caused by a magnet (not shown) in the first housing 201 may be detected by the multiple Hall sensors (not shown). The processor 420 according to one embodiment may identify (check, determine, or calculate) a distance (e.g., about several millimeters) by which the first housing 201 (or at least a portion of the display 460) has slid out from the second housing 202, based on information about the intensity of the magnetic field detected by each of the multiple Hall sensors (not shown). For example, the processor 420 may identify, in increments of about 1 mm, the distance by which the first housing 201 (or at least a portion of the display 460) is slid out from the second housing 202. Although an example in which the sensor module 476 includes a Hall sensor in accordance with one embodiment has been provided, the distance that the first housing 201 (or at least a portion of the display 460) has slid out from the second housing 202 may also be identified by other known distance sensing methods.

The communication module 490 (e.g., the communication module 190 in FIG. 1) according to one embodiment may communicate with the external electronic device 104 based on control of the at least one processor 420 over the first network 198 (e.g., a short-range communication network, such as Bluetooth, wireless fidelity (WiFi) direct, or infrared data association (IrDA)) or the second network 199 (e.g., a long-range communication network, such as a legacy network, a 5G network, a next-generation communication network (e.g., new radio access technology (NR access technology)), the Internet, or a computer network (e.g., LAN or WAN)).

The at least one processor 420 (e.g., the processor 120 in FIG. 1) according to one embodiment may control the overall operation of the components included in the electronic device 401.

The processor 420 according to one embodiment may generate (or set or acquire) a video (e.g., a video clip, hereinafter also referred to as a "video clip") to be displayed on a lock screen or home background screen by using at least some of multiple images (or image frames) included in a video that has been stored in the memory 430, received via the communication module 490, or captured using a camera module (e.g., the camera module 180).

The processor 420 according to one embodiment may select a first image (e.g., the first image or the first image frame of a video clip) corresponding to the retracted state from the multiple images (or image frames) included in the video. According to one embodiment, the processor 420 may display the multiple images included in the video and select the first image based on a user input. The processor 420 according to one embodiment may set (e.g., crop), in the selected first image, a first area having a first size to be displayed in a first display area in the retracted state. For example, the processor 420 may identify an object included in the first image and set the first area around the object, or may set an area selected by user input in the first image as the first area.

The processor 420 according to one embodiment may select a second image (e.g., the last image or last image frame of the video clip) corresponding to an extended state from among the images following the first image included in the video. According to one embodiment, the processor 420 may display the multiple images included in the video and select one of the images following the first image as the second image, based on specified criteria (e.g., time criteria, frame criteria, or hybrid criteria). According to one embodiment, when selecting the second image based on time criteria, the processor 420 may select, based on a time taken for the display 460 to transition from the retracted state to the extended state of the display, an image corresponding to the time from the first image among the images as the second image. According to one embodiment, when selecting the second image based on frame criteria, the processor 420 may select one of the images following the first image as the second image based on a user input. According to one embodiment, when selecting the second image based on hybrid criteria, the processor 420 may select one of the images following the first image as the second image based on a user input within a range that is greater or less by a specified time than the time taken for the display 460 to transition from the retracted state to the extended state of the display.

The processor 420 according to one embodiment may set (e.g., crop), in the selected second image, a second area having a second size to be displayed in a second display area in the extended state. For example, the processor 420 may identify an object included in the second image and set the second area around the object, or may set, as the second area, an area selected by a user input in the second image. Based on the first size of the first image and the second size of the second image, the processor 420 according to one embodiment may identify a size and an area of each of at least one image included between the first image and the second image, and may set (crop) an identified area having an identified size in each of the at least one image. The processor 420 according to one embodiment may use the first area in the first image, the second area in the second image, and at least one area of each of the at least one image between the first image and the second image to generate (or acquire, set, or store) a video clip to be displayed on the lock screen or the background screen.

The processor 420 according to one embodiment may identify the occurrence of a video clip playback event. According to one embodiment, the processor 420 may identify the occurrence of an event that causes a video clip to be played on a lock screen in a locked state, or the occurrence of an event that causes a video clip corresponding to a background screen to be played back in a home state. The processor 420 according to one embodiment may identify a retracted state, a moving state, or an extended state of the display 460, based on identifying the occurrence of the video clip playback event. The processor 420 according to one embodiment may identify whether the display 460 is in the retracted state, the moving state, or the extended state by using sensor information detected by at least one sensor (e.g., a Hall sensor) included in the sensor module 476. The processor 420 according to one embodiment may identify (check, determine, or calculate), when the display 460 is in the moving state, a distance (e.g., about several millimeters) by which the first housing 201 (or at least a portion of the display 460) has slid out from the second housing 202, and may identify a movement distance of the display based on the identified slide-out distance.

The processor 420 according to one embodiment may display a first image (e.g., a first still image) included in a video clip in a display area in the retracted state (e.g., the first display area A1) when the display 460 is in the retracted state. For example, the first image may be an image included in a first image frame of multiple image frames of the video clip. The processor 420 according to one embodiment may play back at least a portion of the video clip in a display area in the moving state when the display 460 is in the moving state. The processor 420 according to one embodiment may match, in the moving state, each of at least one image following the first image included in a video to a corresponding movement length of the display 460, and display the image (or a partial area of the image) corresponding to the corresponding movement length of the display 460 in the moving state. The processor 420 according to one embodiment may play back a portion of the video clip by successively displaying images corresponding to the movement lengths when the display 460 is moving. The processor 420 according to one embodiment may display a second image (e.g., a second still image) included in the video clip in a display area in the extended state (e.g., the second display area A2) when the display 460 is in the extended state. For example, the second image may be an image included in the last image frame of the video clip.

The memory 430 according to one embodiment may store application programs and data. For example, the memory 430 may store an application (a function or program) associated with a video clip playback operation based on identifying the retracted state, moving state, and/or extended state of the display 460. The memory 430 according to one embodiment may store, in addition to a program (e.g., the program 140 in FIG. 1) used to perform a function operation, various types of data that is generated during execution of the program 140. The memory 430 may broadly include a program area 140 and a data area (not shown). The program area 140 may store program information related to driving the electronic device 401, such as an operating system (OS) (e.g., the operating system 142 in FIG. 1) to boot the electronic device 401. The data area (not shown) may store transmitted and/or received data and generated data according to various embodiments. Furthermore, the memory 430 may include at least one storage medium among flash memory, hard disk, multimedia card micro-type memory (e.g., secure digital (SD) or extreme digital (XD) memory), RAM, and ROM.

According to one embodiment, the electronic device 401 may further include various components without being limited to the components shown in FIG. 4. According to one embodiment, the electronic device 401 may further include an image processing module (not shown). The image processing module may perform, based on control of the processor 420, 2D or 3D image processing and/or rendering operations associated with a video clip. In the above-described one embodiment, the major components of the electronic device have been described with reference to the electronic device 401 in FIG. 4. However, in various embodiments, not all of the components shown in FIG. 4 are required, and the electronic device 401 may be implemented to include additional components in addition to the components shown, or the electronic device 401 may be implemented by omitting or combining some of the illustrated components.

According to one embodiment, an electronic device (e.g., the electronic device 101 in FIG. 1 or the electronic device 401 in FIG. 4) may include a first housing (e.g., the first housing 201 in FIG. 2), a second housing configured to accommodate at least a portion of the first housing and connected to the first housing to enable sliding of the first housing (e.g., according to a second embodiment in FIG. 2, an electronic device 101 in FIG. 1 or the electronic device 401 in FIG. 4) may include a first housing (e.g., the first housing 201 in FIG. 1), a second housing (e.g., the second housing 202 in FIG. 2) configured to accommodate at least a portion of the first housing and connected to the first housing to enable a sliding movement of the first housing, a flexible display (e.g., the display 160 in FIG. 1 or the flexible display 460 in FIG. 4) connected to the first housing, a driving unit (e.g., the slide driving unit 465 in FIG. 4) configured to move the first housing and the flexible display in an extension direction or a retraction direction, memory (e.g., the memory 130 in FIG. 1 or the memory 430 in FIG. 4), and a processor (e.g., the processor 120 in FIG. 1 or the processor 420 in FIG. 4). According to one embodiment, the memory may store instructions which, when executed by the processor, cause the electronic device to identify one state from among a retracted state, a moving state, and an extended state of the flexible display, based on a video clip playback event. According to one embodiment, the at least one processor may, in the retracted state of the flexible display, display, in a display area of the retracted state, a first image included in a video clip. According to an embodiment, the at least one processor may, in the moving state of the flexible display, display, in a display area of the moving state, a video by using at least a portion of the video clip. According to an embodiment, the at least one processor may store instructions configured to, in the extended state of the flexible display, control the flexible display to display, in a display area of the extended state a second image included in the video clip.

According to one embodiment, the electronic device (e.g., electronic device 101 in FIG. 1 or the electronic device 401 in FIG. 4) may further include a sensor module (e.g., the sensor module 176 in FIG. 1 or the sensor module 476 in FIG. 4). According to one embodiment, the instructions may be further configured to cause the electronic device to identify, using the sensor module, a movement length moved by the flexible display in the retraction direction or the extension direction.

According to one embodiment, the instructions may be further configured to cause the electronic device to match, in the moving state, each of at least one image following the first image included in the video clip to a corresponding movement length of the flexible display and successively display the at least one image based on an increase in the movement length of the flexible display.

According to one embodiment, the instructions may be further configured to cause the electronic device to generate the video clip and store the generated video clip in the memory.

According to one embodiment, the instructions may be further configured to cause the electronic device to select a first image corresponding to the retracted state from among multiple images included in a video. According to one embodiment, the instructions may be further configured to cause the electronic device to set a first area, having a first size corresponding to the retracted state, in the selected first image. According to an embodiment, the instructions may be further configured to cause the electronic device to select a second image corresponding to the extended state from among images following the first image among the multiple images. According to one embodiment, the instructions may be further configured to cause the electronic device to set a second area, having a second size corresponding to the extended state, in the selected second image. According to one embodiment, the instructions may be further configured to cause the electronic device to identify a size and an area of each of at least one image, included between the first image and the second image, among the multiple images, and to set the size and the area of each of the at least one image. According to one embodiment, the instructions may be further configured to cause the electronic device to generate the video clip by using the first area in the first image, the second area in the second image, and at least one area of each of the at least one image.

According to one embodiment, the video may be a video stored in the memory.

According to one embodiment, the electronic device (e.g., the electronic device 101 in FIG. 1 or the electronic device 401 in FIG. 4) may further include a communication module (e.g., the communication module 190 in FIG. 1 or the communication module 490 in FIG. 4), and the video may be a video received via the communication module.

According to one embodiment, the electronic device (e.g., the electronic device 101 in FIG. 1 or the electronic device 401 in FIG. 4) may further include a camera module (e.g., the camera module 180 in FIG. 1), and the video may be a video obtained via the camera module.

According to one embodiment, the video clip playback event may include an event that causes the video clip to be played back on a lock screen.

According to one embodiment, the video clip playback event may include an event that causes the video clip to be played back on a home background screen.

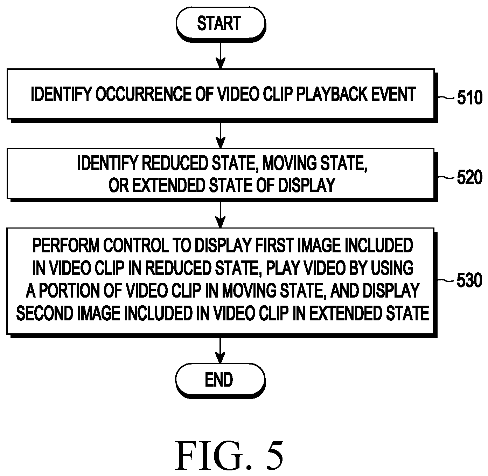

FIG. 5 is a flowchart illustrating video clip playback operation based on extension or retraction of a flexible display in an electronic device according to one embodiment.

Referring to FIG. 5, a processor (e.g., the processor 120 in FIG. 1 or the processor 420 in FIG. 4) of an electronic device (e.g., the electronic device 101 in FIG. 1 or the electronic device 401 in FIG. 4) according to one embodiment may perform at least one of operations 510 to 530.

In operation 510, the processor 420 according to one embodiment may identify the occurrence of a video clip playback event. According to one embodiment, the processor 420 may identify the occurrence of an event that causes a video clip to be played on a lock screen in a locked state, or the occurrence of an event that causes a video clip corresponding to a background screen to be played in a home state.

In operation 520, the processor 420 according to one embodiment may identify a retracted state, a moving state, or an extended state of the display 460 based on identifying the occurrence of the video clip playback event. The processor 420 according to one embodiment may use sensor information detected by at least one sensor (e.g., a Hall sensor) included in the sensor module 476 to identify whether the display 460 is in a retracted state, a moving state, or an extended state. When the display 460 is in a moving state, the processor 420 according to one embodiment may identify (check, determine, or calculate) a distance (e.g., about several millimeters) by which the first housing 201 (or at least a portion of the display 460) has slid out from the second housing 202, and may identify a movement distance of the display based on the identified slid-out distance.

In operation 530, the processor 420 according to one embodiment may control the display 460 to display a first image (e.g., a first still image) included in a video clip in the retracted state, play a video using a portion of the video clip in the moving state, and display a second image (e.g., a second still image) included in the video clip in the extended state. The processor 420 according to one embodiment may display the first image included in the video clip in a display area in the retracted state (e.g., the first display area A1) when the display 460 is in the retracted state. For example, the first image may be an image included in a first image frame among multiple image frames of the video clip. The processor 420 according to one embodiment may play at least a portion of the video clip in a display area in the moving state when the display 460 is in the moving state. The processor 420 according to one embodiment may match, in the moving state, each of at least one successive image following the first image included in the video to a corresponding movement length of the display 460, and display the image (or a partial area of the image) corresponding to (or matched to) the corresponding movement length of the display 460 in the moving state. The processor 420 according to one embodiment may play a portion of the video clip by successively displaying the at least one image based on an increase in movement length while the display 460 is moving. The processor 420 according to one embodiment may display the second image (e.g., the second still image) included in the video clip in a display area in the extended state (e.g., the second display area A2) when the display 460 is in the extended state. For example, the second image may be an image included in the last image frame of the video clip.

A method for video playback based on extension or retraction of a flexible display (e.g., the display module 160 in FIG. 1 or the flexible display 460 in FIG. 4) in an electronic device (e.g., the electronic device 101 in FIG. 1 or the electronic device 401 in FIG. 4) according to one embodiment may include an operation of identifying one state from among a retracted state, a moving state, and an extended state of the flexible display, based a video clip playback event. The method according to one embodiment may include an operation of displaying, in the retracted state, a first image included in a video clip on the flexible display of the retracted state. The method according to an embodiment may include an operation of displaying, in the moving state, a video on the flexible display of the moving state by using at least a portion of the video clip. The method according to one embodiment may include an operation of displaying, in the extended state, a second image included in the video clip on the flexible display of the extended state.

The method according to one embodiment may further include an operation of identifying, using a sensor module (e.g., the sensor module 176 in FIG. 1 or the sensor module 476 in FIG. 4), a movement length moved by the flexible display in the retraction direction or the extension direction.

The method according to an embodiment may include an operation of matching, in the moving state, each of at least one image following the first image included in the video clip to a corresponding movement length of the flexible display, and successively displaying the at least one image based on an increase in the movement length of the flexible display.

The method according to one embodiment may further include an operation of generating the video clip and storing the generated video clip in memory of the electronic device.

The method according to one embodiment may include an operation of selecting a first image corresponding to the retracted state from among multiple images included in a video. The method according to one embodiment may include an operation of setting a first area, having a first size corresponding to the retracted state, in the selected first image. The method according to an embodiment may include an operation of selecting a second image corresponding to the extended state from among images following the first image among the plurality of images. The method according to one embodiment may include an operation of setting a second area, having a second size corresponding to the extended state, in the selected second image. The method according to one embodiment may include an operation of identifying a size and an area of each of at least one image, included between the first image and the second image, among the plurality of images. The method according to one embodiment may include an operation of setting the size and the area of each of the at least one image. The method according to one embodiment may include an operation of generating the video clip by using the first area in the first image, the second area in the second image, and at least one area of each of the at least one image.

In the method according to one embodiment, the video may be a video stored in the memory of the electronic device.

In the method according to one embodiment, the video may be a video received via a communication module of the electronic device.

In the method according to one embodiment, the video may be a video obtained via a camera module of the electronic device.

In the method according to one embodiment, the video clip playback event may include an event that causes the video clip to be played back on a lock screen or an event that causes the video clip to be played back on a home background screen.

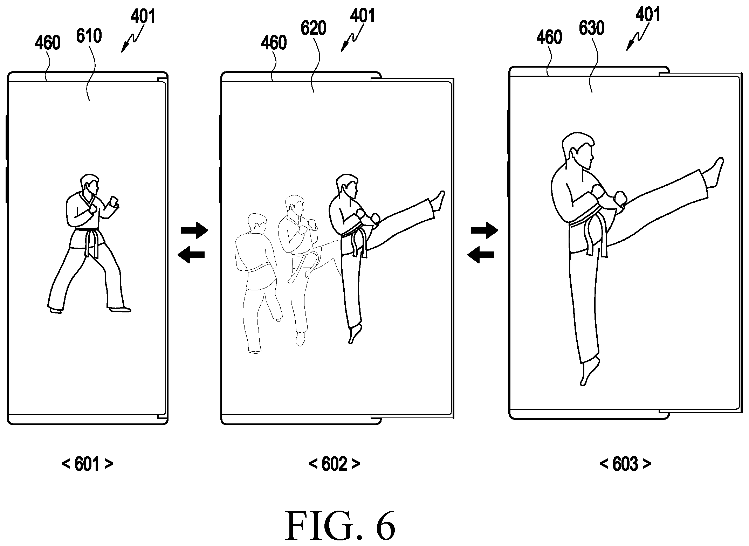

FIG. 6 illustrates screens displayed on a display when an electronic device according to one embodiment is in a retracted state, a moving state, and an extended state.

Referring to FIG. 6, the processor 420 (e.g., the processor 120 in FIG. 1) of the electronic device 401 (e.g., the electronic device 101 in FIG. 1) according to one embodiment may display, in a retracted state <601>, a first image included in a first image frame among multiple image frames of a video clip in a first display area (e.g., the first display area A1). The processor 420 (e.g., the processor 120 in FIG. 1) of the electronic device 401 (e.g., the electronic device 101 in FIG. 1) according to one embodiment may play, in a moving state <602>, at least a portion of the video clip in a display area that varies based on display movement. For example, when the display 460 moves in an extension direction in the retracted state, the processor 420 may play the at least a portion of the video clip by matching each of at least one image following the first image included in the video clip to a corresponding movement length of the display 460, and successively displaying images (or some areas of the images) corresponding to the respective movement lengths of the display 460 while moving the display 460. When the display 460 is in an extended state <603>, the processor 420 according to one embodiment may display a second image 630 (e.g., a second still image), included in the last image frame among the multiple image frames of the video clip, in a display area in the extended state (e.g., the first display area A1 and the second display area A2).

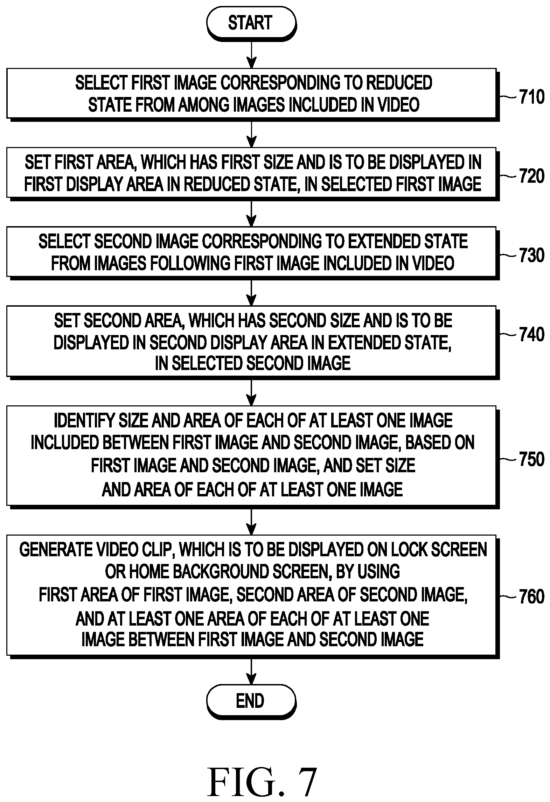

FIG. 7 is a flowchart of video clip generation in an electronic device according to one embodiment.

Referring to FIG. 7, a processor (e.g., the processor 120 in FIG. 1 or the processor 420 in FIG. 4) of an electronic device (e.g., the electronic device 101 in FIG. 1 or the electronic device 401 in FIG. 4) according to one embodiment may perform at least one of operations 710 to 750.

In operation 710, the processor 420 according to one embodiment may select a first image corresponding to a retracted state from among multiple images (e.g., image frames) included in a video. The processor 420 according to one embodiment may select the first image corresponding to the retracted state from among multiple images (or image frames) included in a video stored in the memory 430, a video received via the communication module 490, or a video captured using a camera module (e.g., the camera module 180). The processor 420 according to one embodiment may display the multiple images included in the video on the display 460, and based on a user input, may select the first image or select the first image among the multiple images.

In operation 720, the processor 420 according to one embodiment may set (e.g., crop) a first area, which has a first size and is to be displayed in a display area in the retracted state (e.g., the first display area A1), in the selected first image. For example, the processor 420 may identify an object included in the first image, and may crop the first area around the object or crop, as the first area, an area selected by a user input in the first image.

In operation 730, the processor 420 according to one embodiment may select a second image corresponding to an extended state from among images following the first image included in the video. According to one embodiment, the processor 420 may display the multiple images included in the video and select one of images following the first image as the second image, based on specified criteria (e.g., time criteria, frame criteria, or hybrid criteria). According to one embodiment, when selecting the second image based on time criteria, the processor 420 may select, based on a time taken for the display 460 to transition from the retracted state to the extended state of the display, an image corresponding to the time from the first image among the images as the second image. According to one embodiment, when selecting the second image based on frame criteria, the processor 420 may select one of the images following the first image as the second image, based on user input. According to one embodiment, when selecting the second image based on hybrid criteria, the processor 420 may select one of the images following the first image as the second image, based on the user input, within a range that is greater or less by a specified time than the time taken for the display 460 to transition from the retracted state to the extended state of the display.

In operation 740, the processor 420 according to one embodiment may set (e.g., crop) a second area, which has a second size and is to be displayed in a display area in the extended state (e.g., the first display area A1 and the second display area A2), in the selected second image. For example, the processor 420 may identify an object included in the second image, and may crop the second area around the object or crop, as the second area, an area selected by user input in the second image.

In operation 750, the processor 420 according to an embodiment may identify, based on the first image and the second image, a size and an area of each of at least one image included between the first image and the second image, and set the size and the area of each of the at least one image. For example, the processor 420 may identify a size and an area of each of at least one image included between the first image and the second image, based on a first size of the first image and a second size of the second image, and may set (crop) the identified area having the identified size in each of the at least one image.

In operation 760, the processor 420 according to one embodiment may generate (or obtain, set, or store) a video clip to be displayed on a lock screen or a home background screen by using the first area in the first image, the second area in the second image, and at least one area of each of the at least one image between the first and second images.

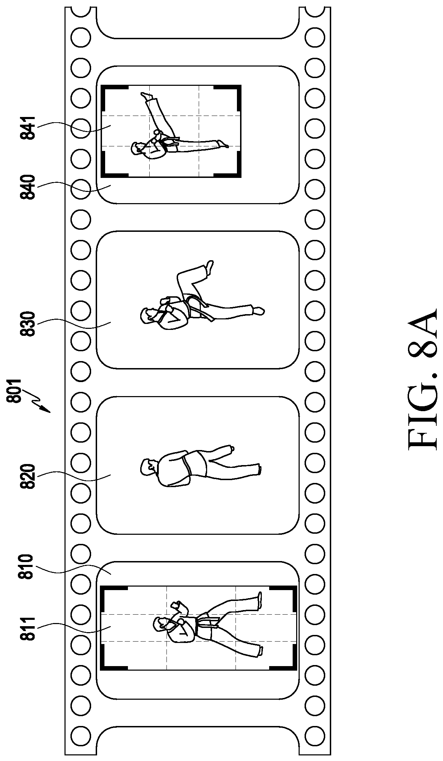

FIG. 8A illustrates image frames of a video according to one embodiment.

Referring to FIG. 8A, a video according to one embodiment may include a video stored in the memory 430, received via the communication module 490, or captured using a camera module (e.g., the camera module 180). Image frames 801 of the video according to one embodiment may include multiple images 810, 820, 830, and 840. The multiple images may include a greater or smaller number of images than the images 810 to 840.

The processor 420 (e.g., the processor 120 in FIG. 1) of the electronic device 401 (e.g., the electronic device 101 in FIG. 1) according to one embodiment may select the first image 810 corresponding to a retracted state from among the multiple images 810, 820, 830, and 840 included in the video. The processor 420 according to one embodiment may display the multiple images 810, 820, 830, and 840 included in the video on the display 460 and, based on user input, may select the first image 810 or select the first image 810 among the multiple images 810, 820, 830, and 840. The processor 420 according to one embodiment may set (e.g., crop) a first area 811, which has a first size and is to be displayed in a first display area in a retracted state, in the selected first image 810. For example, the processor 420 may identify an object (e.g., a person or a main object) included in the first image 810, and may crop the first area 811 around the object or crop, as the first area 811, an area selected by a user input in the first image 810.

The processor 420 according to one embodiment may select the second image 840 corresponding to an extended state from among the multiple images 810, 820, 830, and 840 included in the video. The processor 420 according to one embodiment may display the multiple images 810, 820, 830, and 840 included in the video on the display 460, and select the second image 840 based on specified criteria, such as time criteria, frame criteria, or hybrid criteria.

The processor 420 according to one embodiment may set (e.g., crop) a second area 841, which has a second size and is to be displayed in a second display area in the extended state, in the selected second image 840. For example, the processor 420 may identify an object (e.g., a person or a main object) included in the second image 840, and may crop the second area 841 around the object or crop, as the second area 841, an area selected by user input in the second image 840.

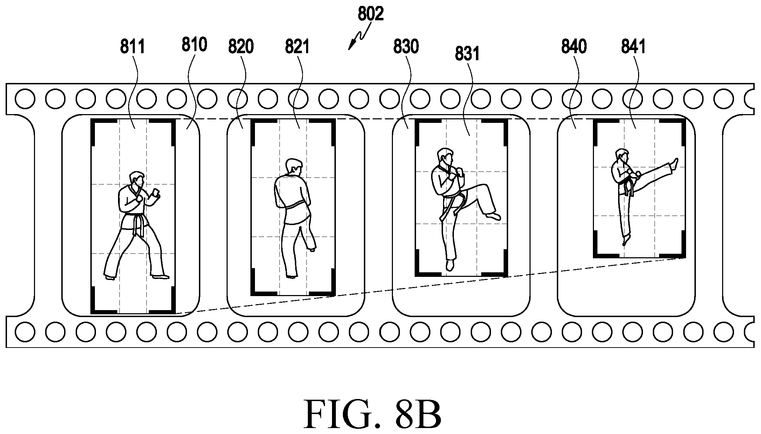

FIG. 8B illustrates an example of setting the size and area of at least one image between a first image corresponding to a retracted state and a second image corresponding to an extended state according to one embodiment.

Referring to FIG. 8B, the processor 420 (e.g., the processor 120 in FIG. 1) of the electronic device 401 (e.g., the electronic device 101 in FIG. 1) according to one embodiment may, based on a first area 811 having a first size in a first image 810 and a second area 841 having a second size in a second image 840, identify may identify a size and an area 821or 831 of at least one image (e.g., 820 or 830) included between the first image 810 and the second image 840, and may set (crop) the identified area 821 or 831 having the identified size in the at least one image (e.g., 820 or 830). The processor 420 according to one embodiment may generate (or acquire, set, or store) a video clip, which is to be displayed on a lock screen or a background screen, by using the first area 811 of the first image 810, the second area 841 of the second image 820, and the at least one area 821 or 831 of each of the at least one image between the first image and the second image.

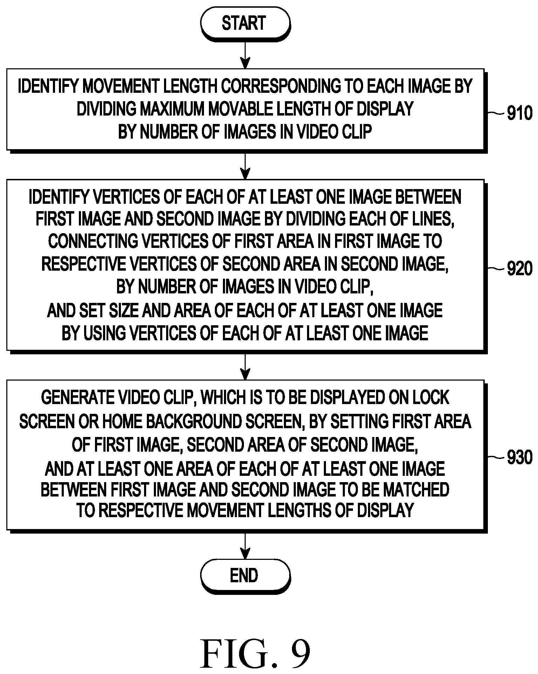

FIG. 9 is a flowchart illustrating the operation of generating a video clip based on the number of images according to frame criteria in one embodiment.

Referring to FIG. 9, a processor (e.g., the processor 120 in FIG. 1 or the processor 420 in FIG. 4) of an electronic device (e.g., the electronic device 101 in FIG. 1 or the electronic device 401 in FIG. 4) according to an embodiment may perform at least one of operations 910 to 930.

In operation 910, the processor 420 according to one embodiment may divide the maximum movable length of the display 460 by the number of images in the video clip to identify a movement length corresponding to each image.

In operation 920, the processor 420 according to one embodiment identifies vertices of each of the at least one image included between the first image 810 and the second image 820 by dividing each of lines, connecting vertices of the first area 811 in the first image 810 to respective vertices of the second area 841 in the second image 840, by the number of images in the video clip, identify the size and area 821 or 831 of each of the at least one image by using the vertices of each of the at least one image, and set (crop) the identified area 821 or 831 having the identified size in the at least one image (e.g., 820 or 830).

In operation 930, the processor 420 according to one embodiment may generate (or acquire, set, or store) a video clip, which is to be displayed on a lock screen or a background screen, by setting the first area 811 of the first image 810, the second area 841 of the second image 840, and the at least one area 821 or 831 of the at least one image 820 or 830 between the first image 810 and the second image 840 to be matched to the respective movement lengths of the display 460, based on the movement lengths corresponding to the images.

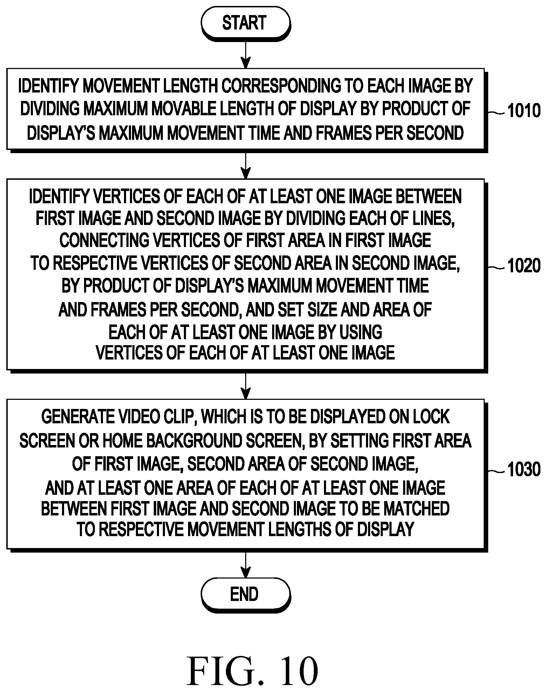

FIG. 10 is a flowchart illustrating the operation of generating a video clip based on a movement time of a display according to time criteria in one embodiment.

Referring to FIG. 10, a processor (e.g., the processor 120 in FIG. 1 or the processor 420 in FIG. 4) of an electronic device (e.g., the electronic device 101 in FIG. 1 or the electronic device 401 in FIG. 4) according to an embodiment may perform at least one of operations 1010 to 1030.

In operation 1010, the processor 420 according to one embodiment may identify a movement length corresponding to an image by dividing the maximum movable length of the display 460 by the product (C×FPS) of the display's maximum movement time (C) and frames per second (FPS).

In operation 1020, the processor 420 according to one embodiment may identify vertices of each of at least one image included between the first image 810 and the second image 820 by dividing each of lines, connecting vertices of the first area 811 of the first image 810 to respective vertices of the second area 841 of the second image 840, by the product (C×FPS) of the display's maximum movement time (C) and frames per second (FPS), identify a size and an area 821 or 831 of each of the at least one image by using the vertices of each of the at least one image, and set (crop) the identified area 821 or 831 having the identified size in the at least one image (e.g., 820 or 830).

In operation 1030, the processor 420 according to one embodiment may generate (or acquire, set, or store) a video clip, which is to be displayed on a lock screen or a home background screen by setting the first area 811 of the first image 810, the second area 841 of the second image 820, and the at least one area 821 or 831 of each of the at least one image between the first and second images to be matched to the respective movement lengths of the display 460, based on the movements lengths corresponding to the images.

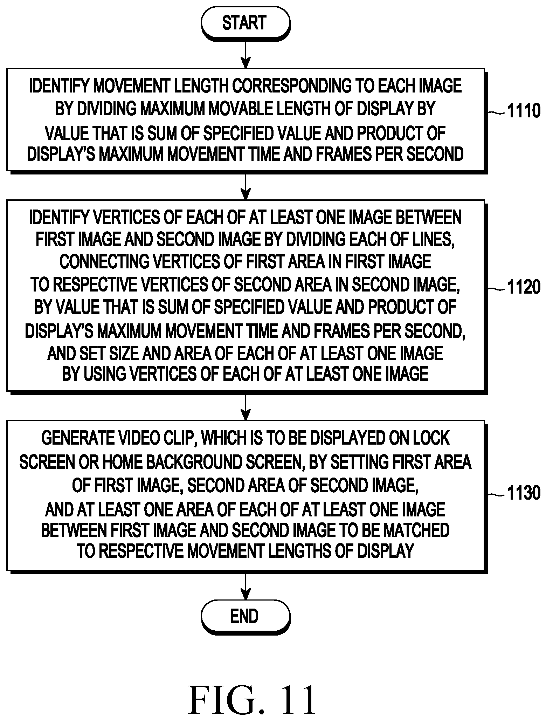

FIG. 11 is a flowchart illustrating the operation of generating a video clip based on the number of images and the movement time of a display according to hybrid criteria in one embodiment.

Referring to FIG. 11, a processor (e.g., the processor 120 in FIG. 1 or the processor 420 in FIG. 4) of an electronic device (e.g., the electronic device 101 in FIG. 1 or the electronic device 401 in FIG. 4) according to an embodiment may perform at least one of operations 1110 to 1130.

In operation 1110, the processor 420 according to one embodiment may identify a movement length corresponding to an image by dividing the maximum movable length of the display 460 by a value that is the sum of a specified value ((C×FTS)×N%, where N is a natural number) and the product (C×FTS) of the display's maximum movement time (C) and frames per second (FPS).

In operation 1120, the processor 420 according to one embodiment may identify vertices of each of at least one image included between the first image 810 and the second image 820 by dividing each of lines, connecting vertices of the first area 811 in the first image 810 to respective vertices of the second area 841 in the second image 840, by a value that is the sum of the specified value ((C×FTS)×N%, N is a natural number) and the product (C×FTS) of the display's maximum movement time (C) and frames per second (FPS), identify a size and an area 821 or 831 of each of the at least one image by using the vertices of each of the at least one image, and set (crop) the identified area 821 or 831 having the identified size in each of the at least one image (e.g., 820 or 830).

In operation 1130, the processor 420 according to one embodiment may generate (or acquire, set, or store) a video clip, which is to be displayed on a lock screen or a background screen by setting the first area 811 of the first image 810, the second area 841 of the second image 820, and the at least one area 821 or 831 of each of the at least one image between the first image and the second image to be matched to the respective movement lengths of the display 460, based on the movement lengths corresponding to the images.

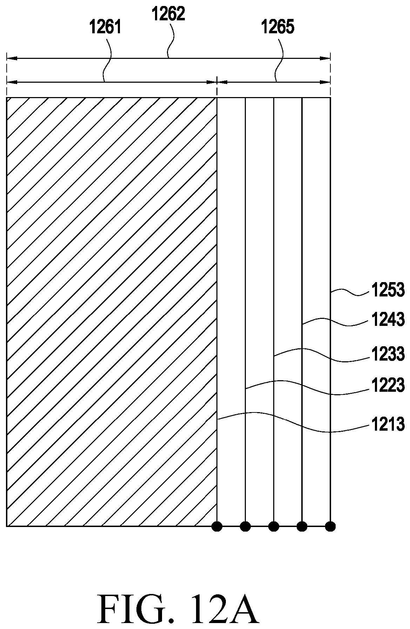

FIG. 12A illustrates a movement length based on the extension of a display according to one embodiment.

Referring to FIG. 12A, the display 460 of an electronic device (e.g., the electronic device 101 in FIG. 1 or the electronic device 401 in FIG. 4) according to one embodiment may have a first length 1261 which is the shortest transverse length of a display screen in a retracted state. The display 460 of the electronic device 401 according to one embodiment may have a second length 1262 that is the longest transverse length of the display screen in an extended state. The display 460 of the electronic device 401 according to one embodiment may be in the extended state when the display 460 is extended from the retracted state by a maximum movable distance 1265.

The processor 420 (e.g., the processor 120 in FIG. 1) of the electronic device 401 according to one embodiment may divide the maximum movable length 1265 of the display 460 by the number of images in a video clip to identify movement lengths 1213, 1223, 1233, 1243, and 1253 corresponding to the respective images. The processor 420 according to one embodiment may identify the movement lengths 1213, 1223, 1233, 1243, and 1253 corresponding to the respective images by dividing the maximum movable length of the display 460 by the product (C×FPS) of the display's maximum movement time (C) and frames per second (FPS). The processor 420 according to one embodiment may identify the movement lengths 1213, 1223, 1233, 1243, and 1253 corresponding to the respective images by dividing the maximum movable length of the display 460 by a value that is the sum of a specified value ((C×FTS)×N%, where N is a natural number) and the product (C×FTS) of the display's maximum movement time (C) and frames per second (FPS).

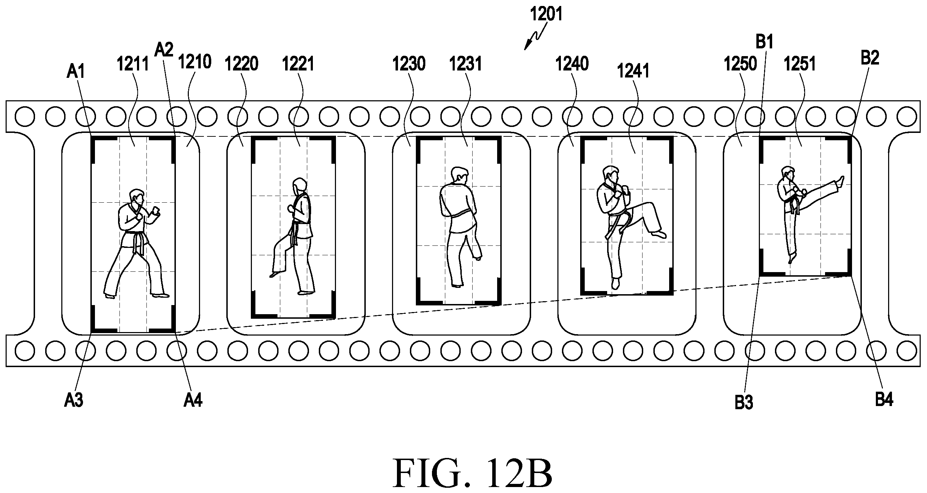

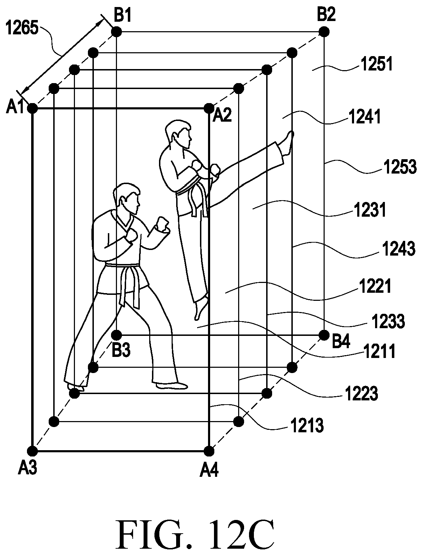

FIG. 12B illustrates lines connecting vertices of a first area in a first image to respective vertices of a second area in a second image according to one embodiment, and FIG. 12C illustrates the size and area of each of at least one image between the first image and the second image according to one embodiment.

Referring to FIGS. 12B and 12C, the processor 420 according to one embodiment may identify vertices of each of at least one image 1220 to 1240 included between a first image 1210 and a second image 1250 by dividing each of lines, respectively connecting vertices A1 to A4 of a first area 1211 in the first image 1210 to vertices B1 to B4 of a second area 1241 in the second image 1240 among images in a video 1201, by the number of the images 1210 to 1250 in the video clip, identify respective sizes and areas 1221, 1231, and 1241 of at least one image 1220 to 1240 by using the vertices of each of the at least one image 1220 to 1240, and set (crop) the identified areas 1221, 1231, and 1241 having the identified sizes in the at least one image 1220 to 1240. The processor 420 according to one embodiment may generate (or acquire, set, or store) a video clip, which is to be displayed on a lock screen or background screen, by setting the first area 1211 of the first image 1210, the second area 1251 of the second image 1240, and the at least one area 1221, 1231, or 1241 of the at least one image 1220, 1230, or 1240 between the first image 1210 and the second image 1250 to be matched to the respective movement lengths 1213, 1223, 1233, 1243, and 1253 of the display 460 based on the movement lengths corresponding to the images.

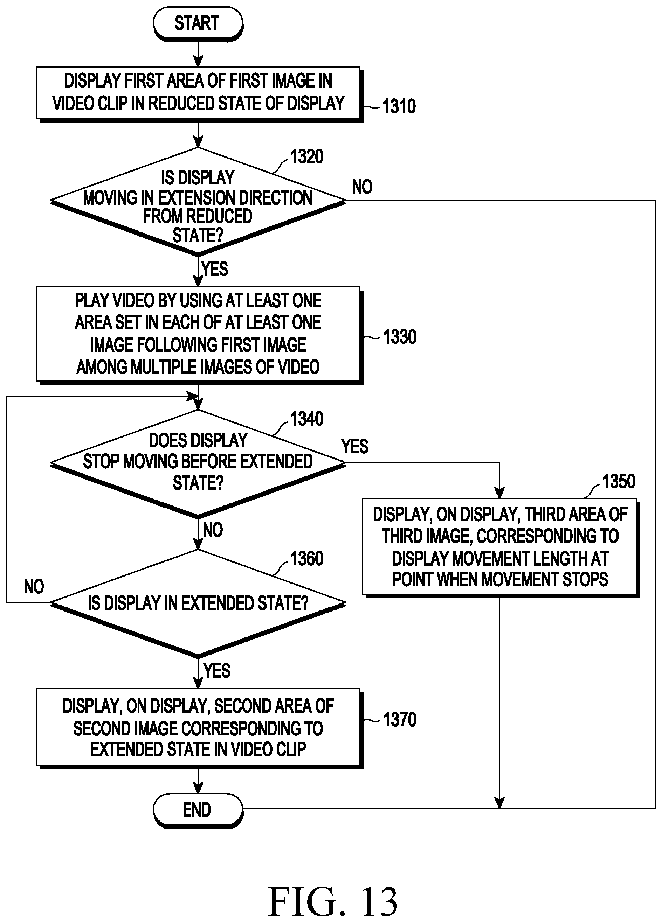

FIG. 13 is a flowchart illustrating a video clip playback operation when a display according to one embodiment transitions from a retracted state to an extended state.

Referring to FIG. 13, a processor (e.g., the processor 120 in FIG. 1 or the processor 420 in FIG. 4) of an electronic device (e.g., the electronic device 101 in FIG. 1 or the electronic device 401 in FIG. 4) according to an embodiment may perform at least one of operations 1310 to 1370.

In operation 1310, the processor 420 according to one embodiment may, in a retracted state, display a first area of a first image in a video clip on the display 460.

In operation 1320, the processor 420 according to one embodiment may identify whether the display 460 is moving in an extension direction from the retracted state.

In operation 1330, when the display 460 is moving in the extension direction from the retracted state (operation 1320-Yes), the processor 420 according to one embodiment may play a video by using at least one area set in each of at least one image following the first image in the video clip.

In operation 1340, the processor 420 according to one embodiment may identify whether the display 460 stops the movement before an extended state.

In operation 1350, when the display 460 stops moving before an extended state (operation 1340-Yes), the processor 420 according to one embodiment may display, on the display 460, a third area of a third image corresponding to a display movement length at the point when the movement stops. For example, when the moving of the display 460 is stopped during video playback, based on the display 460 being in the moving state, the processor 420 according to one embodiment may display, on the display 460, an area of the image at the point when the movement stops.

In operation 1360, when the display 460 does not stop moving before the extended state (1340 operation-No), the processor 420 according to one embodiment may identify whether the display 460 is in the extended state. Unless the display 460 stops moving and is in the extended state (operation 1360-No), the processor 420 according to one embodiment may maintain video playback, based on the display 460 being in the moving state.

In operation 1370, when the display 460 is in the extended state without stopping moving (operation 1360-Yes), the processor 420 according to an embodiment may display, on the display 460, a second area in a second image, corresponding to the extended state, in the video clip.

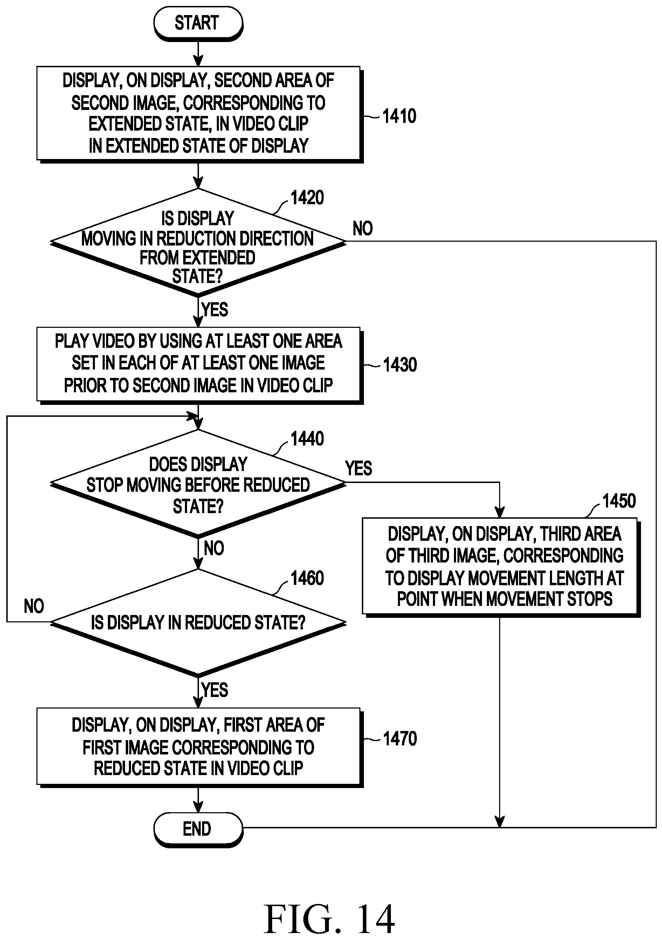

FIG. 14 is a flowchart illustrating a video clip playback operation when a display according to one embodiment transitions from an extended state to a retracted state.

Referring to FIG. 14, a processor (e.g., the processor 120 in FIG. 1 or the processor 420 in FIG. 4) of an electronic device (e.g., the electronic device 101 in FIG. 1 or the electronic device 401 in FIG. 4) according to an embodiment may perform at least one of operations 1410 to 1470.

In operation 1410, when the display 460 is in an extended state, the processor 420 according to one embodiment may display a second area in a second image in a video clip on the display 460.

In operation 1420, the processor 420 according to one embodiment may identify whether the display 460 is moving in a retraction direction from the extended state.

In operation 1430, when the display 460 is moving in the retraction direction from the extended state (operation 1420-Yes), the processor 420 according to one embodiment may play a video by using at least one area set in each of at least one image prior to the second image in the video clip.

In operation 1440, the processor 420 according to one embodiment may identify whether the display 460 stops moving before the retracted state.

In operation 1450, when the display 460 stops moving before the retracted state (operation 1440-Yes), the processor 420 according to one embodiment may display, on the display 460, a third area of a third image corresponding to a display movement length at the point when the movement stops. For example, when the moving of the display 460 is stopped during video playback, based on the display 460 being in a moving state, the processor 420 according to one embodiment may display, on the display 460, an area of an image at the point when the movement stops.

In operation 1460, when the display 460 does not stop moving before the retracted state (operation 1440-No), the processor 420 according to one embodiment may identify whether the display 460 is in the retracted state. Unless the display 460 stops moving and is in the retracted state (operation 1460-No), the processor 420 according to one embodiment may continuously perform video playback, based on the display 460 being in the moving state.

In operation 1470, when the display 460 is in the retracted state without stopping the movement (operation 1460-Yes), the processor 420 according to an embodiment may display, on the display 460, a first area in the first image, corresponding to the retracted state, in the video clip.

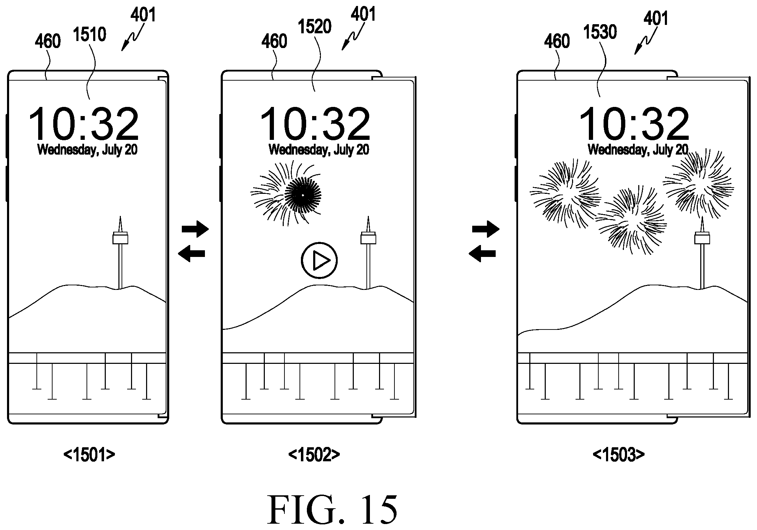

FIG. 15 illustrates a screen on which a video clip is played on a lock screen according to one embodiment.

Referring to FIG. 15, the processor 420 (e.g., the processor 120 in FIG. 1) of the electronic device 401 (e.g., the electronic device 101 in FIG. 1) according to one embodiment may display, in a display area in a retracted state, a first image (e.g., a second still image) 1510 of a video clip on a lock screen when the display 460 is in a retracted state <1501> in a locked state. When the display 460 is in a moving state <1502> in the locked state, the processor 420 according to one embodiment may play a portion (e.g., a video) 1520 of the video clip in a display area in the moving state. According to one embodiment, in the moving state <1502>, the processor 420 may match each of at least one image following the first image included in the video clip to a corresponding movement length of the display 460, and display the video 1520 including the images (or some areas of images) corresponding to the respective movement lengths of the display 460. For example, when the display 460 is moving, the processor 420 may play the portion 1520 of the video clip as a video by successively displaying the images corresponding to the movement lengths. When the display 460 is in an extended state <1503> in the locked state, the processor 420 according to one embodiment may display, in a display area in the extended state, a second image (e.g., a second still image) 1530 included in the video clip on a lock screen.

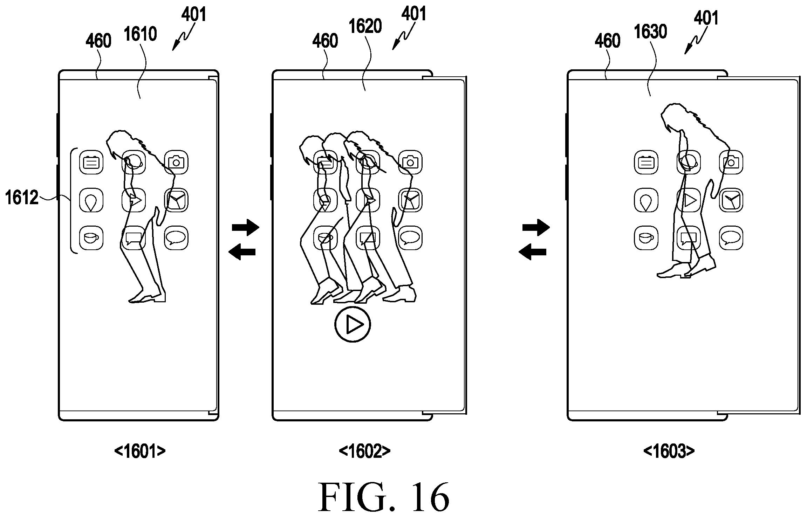

FIG. 16 illustrates a screen on which a video clip is played on a home background screen according to one embodiment.

Referring to FIG. 16, the processor 420 (e.g., the processor 120 in FIG. 1) of the electronic device 401 (e.g., the electronic device 101 in FIG. 1) according to one embodiment may display a first image (e.g., a first still image) 1610 of a video clip on a home background screen with icons 1612 displayed when the display 460 is in a retracted state <1601> in a home state. When the display 460 is in a moving state <1602> in the home state, the processor 420 according to one embodiment may play, in a display area in the moving state, a portion (e.g., a video) 1620 of the video clip on the home background screen. According to one embodiment, in the moving state <1602>, the processor 420 may match each of at least one image following the first image included in the video clip to a corresponding movement length of the display 460, and display the video 1620 including the images (or some areas of images) corresponding to the respective movement lengths of the display 460. For example, when the display 460 is moving, the processor 420 may play the portion 1620 of the video clip as a video by successively displaying the images corresponding to the respective movement lengths. When the display 460 is in an extended state <1603> in the home state, the processor 420 according to one embodiment may display a second image (e.g., a second still image) 1630 included in the video clip on the home background screen with the icons 1612 displayed.

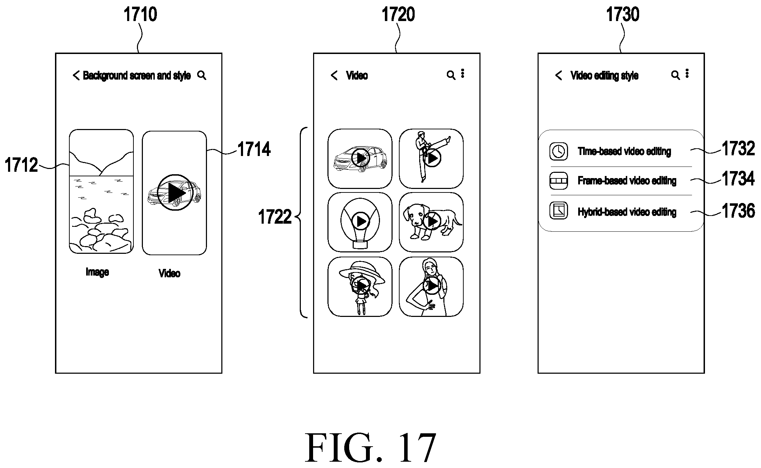

FIG. 17 illustrates screens for selecting a video and an editing method during video clip generation according to one embodiment.

Referring to FIG. 17, the processor 420 according to one embodiment may display a background screen and style screen 1710 for setting (or selecting) a background screen (or home background screen). The processor 420 according to one embodiment may display background screen types on the background screen and style screen 1710. The background screen types may include an image type 1712 and a video type 1714.

The processor 420 according to one embodiment may display, based on a user input (or selection) (e.g., a touch input) for the image type 1712, images (not shown) that can be set (or selected) as background screens in response to the image type 1712. The processor 420 according to one embodiment may display, based on a user input (or selection) (e.g., a touch input) for the video type 1714, a video selection screen 1720 that includes videos 1722 which are available for generating a video clip for the background screen in response to the video type 1714. The processor 420 according to one embodiment may select, from among the videos 1722, a video to be used to generate a video clip based on a user input (or selection) (e.g., a touch input) on the video selection screen 1720.

The processor 420 according to one embodiment may display a video editing style screen 1730 for setting (or selecting) an editing style for a video clip to be generated based on the selected video. The processor 420 according to an embodiment may display a time-based video editing 1732 item, a frame-based video editing 1734 item, and a hybrid video editing 1736 item on the video editing style screen 1730. For example, the time-based video editing 1732 may be an editing item for generating a video clip based on the movement time of a display, and the frame-based video editing 1734 may be an editing item for generating a video clip based on the number of images. The hybrid video editing 1736 may be an editing item for generating a video clip based on the number of images and the movement time of the display.

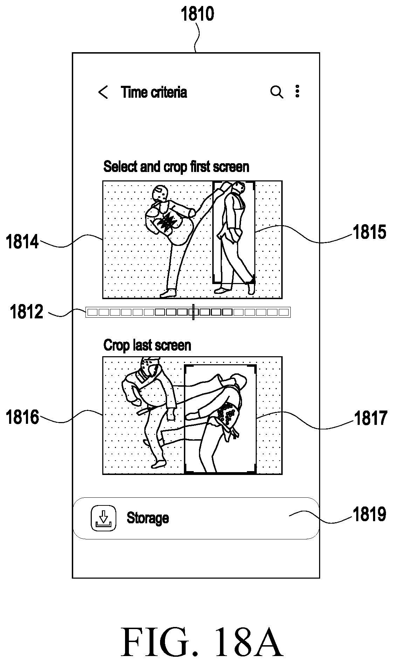

FIG. 18A illustrates a screen displayed when generating a video clip based on the movement time of a display according to time criteria in one embodiment.

Referring to FIG. 18A, the processor 420 according to one embodiment may display a screen 1810 for generating a video clip based on the movement time of a display according to time criteria. The processor 420 according to one embodiment may select a first image 1814 corresponding to a retracted state, based on a user input (or selection) (e.g., a touch input), from among multiple images (or image frames) 1812 included in a video (e.g., selected for use in generating the video clip). The processor 420 according to one embodiment may set (e.g., crop) a first area 1815, which has a first size and is to be displayed in a first display area in the retracted state, in the selected first image 1814. For example, the processor 420 may identify an object included in the first image and set the first area 1815 around the object, or may set, as the first area 1815, an area selected by a user input in the first image. According to one embodiment, when selecting a second image based on time criteria, the processor 420 may, based on a time taken for the display 460 to transition from the retracted state to an extended state of the display, select an image corresponding to the time from the first image 1814 among images as the second image 1816. The processor 420 according to one embodiment may set (e.g., crop) a second area 1817, which has a second size and is to be displayed in a second display area in the extended state, in the selected second image 1816. For example, the processor 420 may identify an object included in the second image 1816 and set the second area 1817 around the object, or may set, as the second area 1817, an area selected by a user input in the second image 1816. Based on the first size of the first area 1815 and the second size of the second area 1817, the processor 420 according to one embodiment may identify the size and area of each of at least one image included between the first image 1814 and the second image 1816, and may set (crop) the identified area having the identified size in each of the at least one image. Based on storage 1819 being selected, the processor 420 according to an embodiment may generate (or acquire) a video clip, which is to be displayed on a background screen, by using the first area 1815 of the first image 1814, the second area 1817 of the second image 1816, and the at least one area of each of the at least one image between the first image and the second image, and may store the generated video clip in the memory 430 based on time criteria.

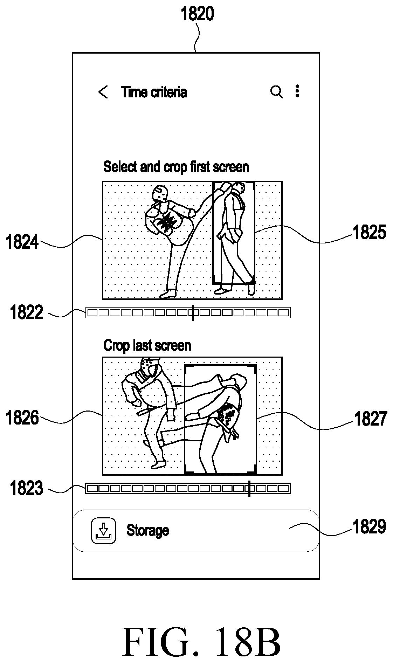

FIG. 18B illustrates a screen displayed when generating a video clip based on a user input according to frame criteria in to one embodiment.

Referring to FIG. 18B, the processor 420 according to one embodiment may display a screen 1820 for generating a video clip based on a user input according to frame criteria. The processor 420 according to one embodiment may select, based on the user input (or selection) (e.g., touch input), a first image 1824 corresponding to a retracted state from among multiple images (or image frames) 1822 included in a video (e.g., selected for use in generating a video clip). The processor 420 according to one embodiment may set (e.g., crop) a first area 1825, which has a first size and is to be displayed in a first display area in the retracted state, in the selected first image 1824. For example, the processor 420 may identify an object included in the first image 1824 and set the first area 1815 around the object, or may set, as the first area 1825, an area selected by a user input in the first image 1824. According to one embodiment, when selecting a second image 1826 based on frame criteria, the processor 420 may select, based on a user input, one of images 1823 following the first image 1824 as the second image 1827. The processor 420 according to one embodiment may set (e.g., crop) a second area 1827, which has a second size and is to be displayed in a second display area in the extended state, in the selected second image 1826. For example, the processor 420 may identify an object included in the second image 1826 and set the second area 1827 around the object, or may set, as the second area 1827, an area selected by a user input in the second image 1826. Based on the first size of the first area 1825 and the second size of the second area 1827, the processor 420 according to one embodiment may identify the size and area of each of at least one image included between the first image 1824 and the second image 1826, and may set (crop) the identified area having the identified size in each of the at least one image. Based on storage 1829 being selected, the processor 420 according to an embodiment may generate (or acquire) a video clip, which is to be displayed on a background screen, by using the first area 1825 of the first image 1824, the second area 1827 of the second image 1826, and the at least one area of each of the at least one image between the first image and the second image, and may store the generated video clip in the memory 430 based on time criteria.

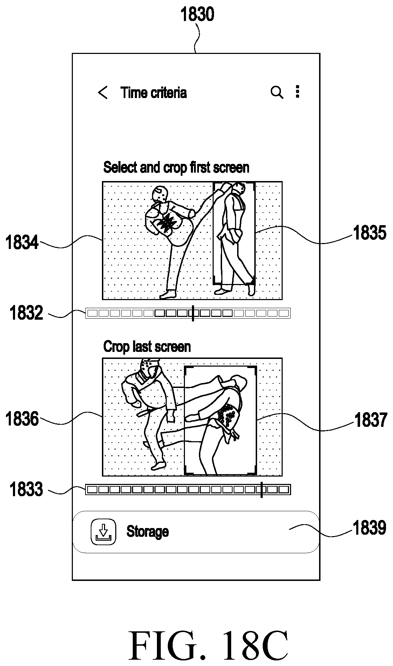

FIG. 18C illustrates a screen displayed during video clip generation based on hybrid criteria according to one embodiment.

Referring to FIG. 18C, the processor 420 according to one embodiment may display a screen 1830 for generating a video clip based on the movement time of a display and a user input according to hybrid criteria. The processor 420 according to one embodiment may select, based on the user input (or selection) (e.g., touch input), a first image 1834 corresponding to a retracted state from among multiple images (or image frames) 1832 included in a video (e.g., selected for use in generating a video clip). The processor 420 according to one embodiment may set (e.g., crop) a first area 1835, which has a first size and is to be displayed in a first display area in the retracted state, in the selected first image 1834. For example, the processor 420 may identify an object included in the first image 1834 and set the first area 1835 around the object, or may set, as the first area 1835, an area selected by a user input in the first image 1834. According to one embodiment, when selecting a second image based on the hybrid criteria, the processor 420 may select one of images 1833 following the first image as the second image 1836, based on the user input, within a range that is greater or less by a specified time than the time taken for the display 460 to transition from the retracted state to an extended state of the display. The processor 420 according to one embodiment may set (e.g., crop) a second area 1837, which has a second size and is to be displayed in a second display area in the extended state, in the selected second image 1836. For example, the processor 420 may identify an object included in the second image 1836 and set the second area 1837 around the object, or may set, as the second area 1837, an area selected by a user input in the second image 1836. Based on the first size of the first area 1835 and the second size of the second area 1837, the processor 420 according to one embodiment may identify the size and area of each of at least one image included between the first image 1834 and the second image 1836, and may set (crop) the identified area having the identified size in each of the at least one image. Based on storage 1839 being selected, the processor 420 according to an embodiment may generate (or obtain) a video clip, which is to be displayed on a background screen, by using the first area 1835 of the first image 1834, the second area 1837 of the second image 1836, and the at least one area of each of the at least one image between the first image 1834 and the second image 1834, and may store the generated video clip in the memory 430 based on time criteria.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to various embodiments, in a non-volatile storage medium storing commands, the commands may be configured to, when executed by an electronic device, cause the electronic device to perform at least one operation, wherein the at least one operation includes an operation of identifying one state from among a retracted state, a moving state, and an extended state of a flexible display, based on a video clip playback event, an operation of displaying, in the retracted state, a first image included in a video clip on the flexible display of the retracted state, an operation of displaying, in the moving state, a video on the flexible display of the moving state by using at least a portion of the video clip, and an operation of displaying, in the extended state, a second image included in the video clip on the flexible display of the extended state.

Furthermore, the embodiments of the disclosure, described in this specification and drawings, are merely presented as specific examples to easily describe the technical content of the embodiments of the disclosure and to aid in understanding the embodiments of the disclosure, and are not intended to limit the scope of the embodiments of the disclosure. Therefore, the scope of the various embodiments of the disclosure should be interpreted as including not only the embodiments described herein but also all modifications or variations derived based on the technical idea of the various embodiments of the disclosure.

## Claims

1. An electronic device comprising:
a first housing;
a second housing configured to accommodate at least a portion of the first housing and connected to the first housing to enable a sliding movement of the first housing;
a flexible display connected to the first housing;
a driving unit configured to move the first housing and the flexible display in an extension direction or a retraction direction,
memory; and
a processor,
wherein the memory stores instructions configured to, when executed by the processor, cause the electronic device to:
identify one state from among a retracted state, a moving state, and an extended state of the flexible display, based on a video clip playback event; and
control the flexible display to: in the retracted state of the flexible display, display, in a display area of the retracted state, a first image included in a video clip ; in the moving state of the flexible display, display, in a display area of the moving state, a video by using at least a portion of the video clip; and in the extended state of the flexible display, display, in a display area of the extended state, a second image included in the video clip .

2. The electronic device of claim 1, further comprising a sensor module,
wherein the instructions are further configured to cause the electronic device to identify, using the sensor module, a movement length moved by the flexible display in the retraction direction or the extension direction.

3. The electronic device of claim 1 or 2, wherein the instructions are further configured to cause the electronic device to match, in the moving state, each of at least one image following the first image included in the video clip to a corresponding movement length of the flexible display and successively display the at least one image based on an increase in the movement length of the flexible display.

4. The electronic device of one of claims 1 to 3, wherein the instructions are further configured to cause the electronic device to generate the video clip and store the generated video clip in the memory.

5. The electronic device of one of claims 1 to 4, wherein the instructions are further configured to cause the electronic device to:
select a first image corresponding to the retracted state from among multiple images included in a video;
set a first area, having a first size corresponding to the retracted state, in the selected first image;
select a second image corresponding to the extended state from among images following the first image among the multiple images;
set a second area, having a second size corresponding to the extended state, in the selected second image;
identify a size and an area of each of at least one image, included between the first image and the second image, among the multiple images;
set the size and the area of each of the at least one image; and
generate the video clip by using the first area in the first image, the second area in the second image, and at least one area of each of the at least one image.

6. The electronic device of one of claims 1 to 5, further comprising:
a communication module; and
a camera module,
wherein the video is a video that is stored in the memory, received via the communication module, or obtained via the camera module.

7. The electronic device of one of claims 1 to 6, wherein the video clip playback event comprises an event that causes the video clip to be played back on a lock screen or a home background screen.

8. A method for video playback based on extension or retraction of a flexible display in an electronic device, the method comprising:
identifying one state from among a retracted state, a moving state, and an extended state of the flexible display, based a video clip playback event;
in the retracted state, displaying a first image included in a video clip on the flexible display of the retracted state;
in the moving state, displaying a video on the flexible display of the moving state by using at least a portion of the video clip; and
in the extended state, displaying a second image included in the video clip on the flexible display of the extended state.

9. The method of claim 8, further comprising identifying, using a sensor module, a movement length moved by the flexible display in the retraction direction or the extension direction.

10. The method of claim 8 or 9, comprising matching, in the moving state, each of at least one image following the first image included in the video clip to a corresponding movement length of the flexible display, and successively displaying the at least one image based on an increase in the movement length of the flexible display.

11. The method of one of claims 8 to 10, further comprising generating the video clip and storing the generated video clip in memory of the electronic device.

12. The method of one of claims 8 to 11, comprising:
selecting a first image corresponding to the reduced state from among multiple images included in a video;
setting a first area, having a first size corresponding to the retracted state, in the selected first image;
selecting a second image corresponding to the extended state from among images following the first image among the multiple images;
setting a second area, having a second size corresponding to the extended state, in the selected second image;
identifying a size and an area of each of at least one image, included between the first image and the second image, among the plurality of images;
setting the size and the area of each of the at least one image; and
generating the video clip by using the first area in the first image, the second area in the second image, and at least one area of each of the at least one image.

13. The method of one of claims 8 to 12, wherein the video is a video that is stored in the memory of the electronic device, received via a communication module of the electronic device, or obtained via a camera module of the electronic device.

14. The method of one of claims 8 to 13, wherein the video clip playback event comprises an event that causes the video clip to be played back on a lock screen or an event that causes the video clip to be played back on a home background screen.

15. A non-volatile storage medium storing commands, wherein the commands are configured to, when executed by an electronic device, cause the electronic device to perform at least one operation, wherein the at least one operation comprise:
identifying one state from among a retracted state, a moving state, and an extended state of a flexible display, based on a video clip playback event;
in the retracted state, displaying a first image included in a video clip on the flexible display of the retracted state;
in the moving state, displaying a video on the flexible display of the moving state by using at least a portion of the video clip; and
in the extended state, displaying a second image included in the video clip on the flexible display of the extended state.
